(19) Europäisches Patentamt
European Patent Office
Office européen des brevets

(11) **EP 1 504 377 B1**

(12) **EUROPEAN PATENT SPECIFICATION**

(45) Date of publication and mention
of the grant of the patent:
**22.06.2011 Bulletin 2011/25**

(51) Int Cl.:
***G06F 17/30*** (2006.01)

(21) Application number: **03726801.8**

(22) Date of filing: **12.05.2003**

(86) International application number:
**PCT/US2003/014834**

(87) International publication number:
**WO 2003/096230 (20.11.2003 Gazette 2003/47)**

(54) **STORING AND QUERYING RELATIONAL DATA IN COMPRESSED STORAGE FORMAT**

SPEICHERN UND ABFRAGEN RELATIONALER DATEN IN KOMPRIMIERTEM SPEICHERFORMAT

PROCEDE ET DISPOSITIF POUR LE STOCKAGE DE DONNEES ET L'ACCES AUX DONNEES, ET POUR L'AMELIORATION DE LA PERFORMANCE DES FORMULATIONS DE LANGAGE D'INTERROGATION DE BASE DE DONNEES

(84) Designated Contracting States:
**AT BE BG CH CY CZ DE DK EE ES FI FR GB GR HU IE IT LI LU MC NL PT RO SE SI SK TR**

(30) Priority: **10.05.2002 US 144689**
**29.04.2003 US 426452**

(43) Date of publication of application:
**09.02.2005 Bulletin 2005/06**

(73) Proprietor: **Oracle International Corporation**
**Redwood Shores, CA 94065 (US)**

(72) Inventors:
• **POTAPOV, Dmitry, M.**
**Redwood City, CA 94062 (US)**
• **OZBUTUN, Cetin**
**San Carlos, CA 94070 (US)**

(74) Representative: **Skone James, Robert Edmund**
**Gill Jennings & Every LLP**
**The Broadgate Tower**
**20 Primrose Street**
**London EC2A 2ES (GB)**

(56) References cited:
**EP-A- 0 079 465      US-A- 5 414 834**
**US-A- 6 006 232**

• **GOLDSTEIN J ET AL: "Compressing relations and indexes" DATA ENGINEERING, 1998. PROCEEDINGS., 14TH INTERNATIONAL CONFERENCE ON ORLANDO, FL, USA 23-27 FEB. 1998, LOS ALAMITOS, CA, USA,IEEE COMPUT. SOC, US, 23 February 1998 (1998-02-23), pages 370-379, XP010268339 ISBN: 0-8186-8289-2**
• **HAERDER, T. ET AL: "Speicherungsstrukturen" 1999, DATENBANKSYSTEME: KONZEPTE UND TECHNIKEN DER IMPLEMENTIERUNG, BOOK EXCERPT, PAGE(S) 143-175 , GERMANY , XP002192011 page 156, paragraph 3 - page 164, paragraph 3; figures 6.7-6.11**
• **OLKEN F ET AL: "REARRANGING DATA TO MAXIMIZE THE EFFICIENCY OF COMPRESSION" JOURNAL OF COMPUTER AND SYSTEM SCIENCES, ACADEMIC PRESS, INC., LONDON, GB, vol. 38, no. 2, April 1989 (1989-04), pages 405-430, XP008002942 ISSN: 0022-0000**
• **CHEN Z ET AL: "An algebraic compression framework for query results" DATA ENGINEERING, 2000. PROCEEDINGS. 16TH INTERNATIONAL CONFERENCE ON SAN DIEGO, CA, USA 29 FEB.-3 MARCH 2000, LOS ALAMITOS, CA, USA,IEEE COMPUT. SOC, US, 29 February 2000 (2000-02-29), pages 177-188, XP010378704 ISBN: 0-7695-0506-6**

EP 1 504 377 B1

- NG W K ET AL: "Relational database compression using augmented vector quantization" DATA ENGINEERING, 1995. PROCEEDINGS OF THE ELEVENTH INTERNATIONAL CONFERENCE ON TAIPEI, TAIWAN 6-10 MARCH 1995, LOS ALAMITOS, CA, USA,IEEE COMPUT. SOC, 6 March 1995 (1995-03-06), pages 540-549, XP010130134 ISBN: 0-8186-6910-1
- GRAEFE G ET AL: "Data compression and database performance" APPLIED COMPUTING, 1991., PROCEEDINGS OF THE 1991 SYMPOSIUM ON KANSAS CITY, MO, USA 3-5 APRIL 1991, LOS ALAMITOS, CA, USA,IEEE COMPUT. SOC, US, 3 April 1991 (1991-04-03), pages 22-27, XP010022657 ISBN: 0-8186-2136-2
- COCKSHOTT W P ET AL: "Data compression in database systems" DATABASE AND EXPERT SYSTEMS APPLICATIONS, 1998. PROCEEDINGS. NINTH INTERNATIONAL WORKSHOP ON VIENNA, AUSTRIA 26-28 AUG. 1998, LOS ALAMITOS, CA, USA,IEEE COMPUT. SOC, US, 26 August 1998 (1998-08-26), pages 981-990, XP010296751 ISBN: 0-8186-8353-8
- SEGEV A ET AL: "Supporting statistics in extensible databases: a case study" SCIENTIFIC AND STATISTICAL DATABASE MANAGEMENT, 1994. PROCEEDINGS., SEVENTH INTERNATIONAL WORKING CONFERENCE ON CHARLOTTESVILLE, VA, USA 28-30 SEPT. 1994, LOS ALAMITOS, CA, USA,IEEE COMPUT. SOC, 28 September 1994 (1994-09-28), pages 54-63, XP010100543 ISBN: 0-8186-6610-2

**Description**

BACKGROUND AND SUMMARY

The present invention is related to the field of database management systems. More particularly, the present invention is directed to a method and mechanism of storing and retrieving data in a computer system and improving performance of database query language statements.

The quantity of data that must be stored in databases and computer systems is increasing as many modern businesses and organizations increase their need to access greater amounts of information. A significant portion of the expense for storing a large quantity of information is related to the costs of purchasing and maintaining data storage systems. Given this expense, approaches have been suggested to reduce the amount of space that is needed to store a given quantity of data.

Data compression is a technique used in many modern computer systems to reduce the storage costs for data. A common approach for implementing compression is to compress data at the granularity of the file. For example, traditional compression approaches such as the Unix-based *gzip* or DOS-based *zip* compress an entire file into a more-compact version of that file. A drawback with this type of approach is that if an entire file is compressed, all or a large part of the file must be decompressed before any part of it can be used, even if only a small part of the file is actually needed by a user. This is a problem that particularly exists with respect to compressing files in database systems, in which a single database file may contain large quantities of database records, but only a small portion of the individual records may be needed at any moment in time. Thus, the granularity of compression or decompression may not realistically match the granularity at which data is desirably used and accessed in the system.

However, compression at other granularities may result in storage inefficiencies. For example, certain page-at-a-time compression approaches may lead to compressed pages of different sizes that are inefficiently mapped onto physical pages. In addition, many traditional compression techniques do not even guarantee that data size will not increase after compression.

Moreover, the very acts of compressing and decompressing data could consume an excessive amount of overhead. The overhead is typically related to the specific compression algorithm being used as well as the quantity of data being compressed or decompressed. This overhead could contribute to significant latency when seeking to store, retrieve, or update information in a database system. For example, some compression techniques store compression information separate from the compressed data. Hence, for a simple read access, multiple locations in the database may need to be accessed and expensive decompression operations may need to be performed.

Given the latency problems, as well as less-than-certain compression gains, the trade-off between time and space for compression is not always attractive in a database or other type of computing system. Hence, there is a need for a compression technique that not only results in the reduction of disk space used, but also has no negative impact on the performance of database query language statements against compressed data.

U.S. Patent No. 6,006,232 discloses a table that includes a sub table block, wherein the sub table block includes compressed data and common information associated with the compressed data.

"Compressing relations and indexes" by Goldstein J. et al. discloses a compression algorithm using a page level compression and a file level compression. During the page level compression, values within a range are represented by bits. During the file level compression, objects in a file is partitioned before the file is compressed.

EP 0 079 465 A discloses a method of storing record content, which includes determining a summary list of all data elements from a data base, and mapping the data elements to an index table using the summary list.

"Rearranging Data to Maximize the Efficiency of compression" by Olken F. and Rotem D. uses reordering in the context of run-length compression.

The present invention is a method, computer program and system as defined in the claims.

In one example, data compression is performed on stored data by reducing or eliminating duplicate data values in a data block or other storage unit. In another example, information describing data duplication within the data block is maintained. Another example also provides a method and mechanism of improving performance of database query language statements. In one example, data duplication information maintained is maintained and used to reduce number of predicate evaluations. In another example, the data duplication information is used to reduce amount of data accessed by a database query language statement.

Further details of aspects, objects, and advantages of the invention are described below in the detailed description, drawings, and claims. Both the foregoing general description and the following detailed description are exemplary and explanatory, and are not intended to be limiting as to the scope of the invention.

BRIEF DESCRIPTION OF THE DRAWINGS

The accompanying drawings are included to provide a further understanding of the invention and, together with the Detailed Description, serve to explain the principles of the invention.

Fig. 1 shows a data storage structure according to an embodiment of the invention.

Fig. 2 shows a flowchart of an embodiment of a process for storing data.

Fig. 3 shows a flowchart of an embodiment of a process for retrieving data.

Fig. 4 illustrates recursive referencing of entries in a symbol table according to an embodiment of the invention.

Fig. 5 illustrates column reordering and recursive referencing of entries in a symbol table according to an embodiment of the invention.

Fig. 6 shows a flowchart of an alternate embodiment of a process for storing data.

Fig. 7 illustrates removal of trailing NULL values according to an embodiment of the invention.

Fig. 8 illustrates column reordering and removal of trailing NULL values according to an embodiment of the invention.

Fig. 9 shows a process of transforming an uncompressed data block into a compressed data block according to one embodiment of the invention.

Fig. 10 is a flow chart of a method of improving performance of database query language statements according to one embodiment of the invention.

Fig. 11 depicts a process of maintaining data duplication information according to an embodiment of the invention.

Fig. 12 illustrates maintaining data duplication information according to one embodiment of the invention.

Fig. 13 shows a flow chart of a method of maintaining data duplication information according to another embodiment of the invention.

Fig. 14 illustrates updating data duplication information according to one embodiment of the invention.

Fig. 15 is a process flow of a method of improving performance of database query language statements according to an embodiment of the invention.

Fig. 16 depicts a flow chart of another method of improving performance of database query language statements.

Fig. 17 illustrates an example of how performance of a database query language statement may be improved according to one embodiment of the invention.

tion.

Fig. 18 shows a process flow of a method of improving performance of database query language statements according to another embodiment of the invention.

Fig. 19 depicts a process of reducing the amount of data accessed by a database query language statement according to an embodiment of the invention.

Fig. 20 is an example of how data duplication information may be used to improve performance of database query language statements according to one embodiment of the invention.

Fig. 21 illustrates a flow chart of a method of improving performance of database query language statements according to a further embodiment of the invention.

Fig. 22 shows an example of how data duplication information may be used to satisfy a database query language statement according to one embodiment of the invention.

Fig. 23 is a diagram of a computer system with which embodiments of the present invention can be implemented.

Fig. 24 shows an example search tree according to an embodiment of the invention.

DETAILED DESCRIPTION

Storing and retrieving data from a data storage system is disclosed. Rather than compressing data at the file level or some other granularity, which may lead to storage inefficiencies and/or increased execution time of database query language statements, data compression is achieved by reducing or eliminating duplicate values in a data block or other storage unit. Improving performance of database query language statements is also disclosed. By maintaining information describing data duplication within data blocks, which previously had to be recomputed every time a block was accessed, the data duplication information can be used to improve performance of database query language statements.

Database query language statements are often used to create, search, access, retrieve, modify, organize, maintain, manipulate, define, control, add, and/or delete data and structures within databases. One popular database query language is known as the Structured Query Language (SQL). For purposes of explanation only, and not by way of limitation, the following description is made with particular reference to database statements involving SQL.

The term "disk" or "disk system," which is used throughout this document, refers to data storage systems. The inventive concepts disclosed herein may also be applied to other types of storage systems besides disk-based systems. In addition, the following description will be made with respect to the storage or retrieval of relational data from a database. It is noted, however, that the present invention is applicable to managing other types and granularities of data in a computing system, and thus is not to be limited to compression of relational data.

According to an embodiment of the invention, an identification is made of duplicated values within a set of data that is to be stored within a particular data storage unit. Instead of writing all of these duplicated data values to the data storage unit, a symbol table is created to store one copy of each duplicated data value. Each occurrence of a duplicated data value is configured to reference the corresponding duplicated data value in the symbol table.

As illustrated herein, the data storage units are shown as data blocks or disk pages. However, other data storage units may also be used. In one embodiment, data blocks are self-contained, e.g., the information that is needed to recreate the uncompressed data in a data block is available within the block.

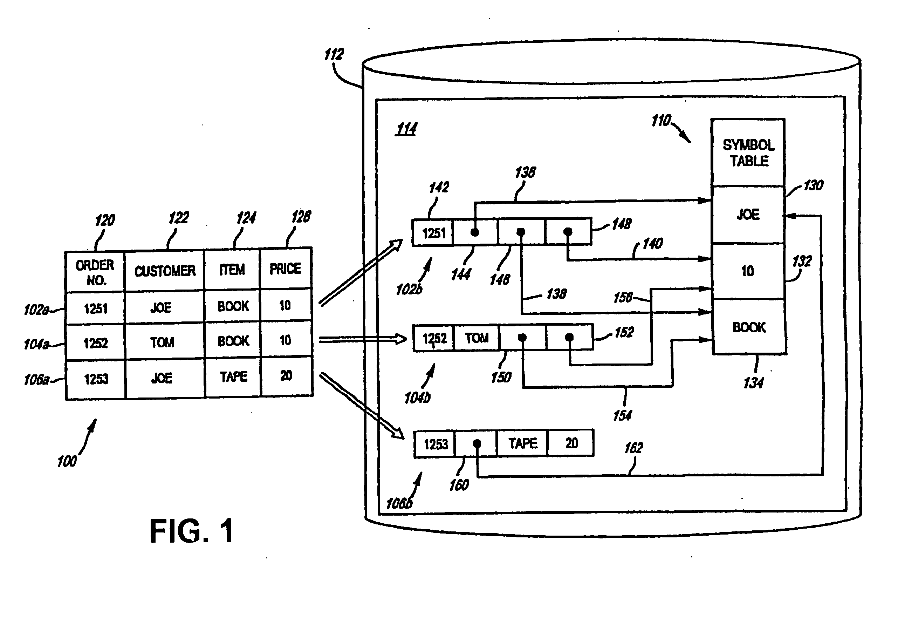

Fig. 1 shows a database table 100 that is to be stored into a block 114 on disk 112. Each row in table 100 includes four columns of information, including an order number column 120, a customer column 122, an item column 124, and a price column 126. Three rows of data are shown in table 100. Row 102a has the value "1251" in order number column 120, the value "Joe" in customer column 122, the value "Book" in item column 124, and the value "10" in price column 126. Row 104a has the value "1252" in order number column 120, the value "Tom" in customer column 122, the value "Book" in item column 124, and the value "10" in price column 126. Row 106a has the value "1253" in order number column 120, the value "Joe" in customer column 122, the value "Tape" in item column 124, and the value "20" in price column 126.

It is noted that the value "Joe" is repeated in customer column 122 for both rows 102a and 106a. Similarly, the value "Book" is repeated in item column 124 for rows 102a and 104a. The value "10" is repeated in price column 126 for rows 102a and 104a.

A symbol table 110 is created to store each duplicated data value. In particular, the duplicated value "Joe" is stored in symbol table entry 130, the duplicated value "10" is stored in symbol table entry 132, and the duplicated value "Book" is stored in symbol table entry 134.

When each row of data in table 100 is stored to block 114 on disk 112, the repeated data values are not again written to disk. Instead, corresponding portions of each row are configured to reference the appropriate symbol table entry in symbol table 110 that contains the correct data value, e.g., using pointer or linking structures.

To illustrate, consider row 102a in table 100. Row 102a includes the following column values: "1251", "Joe", "Book", and "10". It is noted that symbol table 110 includes entries for the "Joe", "Book", and "10" values, which are the duplicated data values in table 100 that appear in row 102a.

As row 102a is written to disk, only the unique value "1251" is individually written to disk. This is shown in on-disk row structure 102b, which corresponds to row 102a in table 100. On-disk row structure 102b includes a first portion 142 corresponding to order number column 120 in row 102a, which includes the unique data value "1251".

For duplicated data values, pointers or links may be inserted into the appropriate portions of the on-disk row structure to point to the appropriate entry in the symbol table 110. On-disk row structure 102b includes a portion 144 corresponding to customer column 122 in row 102a that is configured to include a pointer 136 to symbol table entry 130, which matches the duplicated data value "Joe" in customer column 122 of row 102a. On-disk row structure 102b also includes a portion 146 corresponding to item column 124 in row 102a that is configured to include a pointer 138 to symbol table entry 134, which matches the duplicated data value "Book" in item column 124 of row 102a. On-disk row structure 102b further includes a portion 148 corresponding to price column 126 in row 102a that is configured to include a pointer 140 to symbol table entry 132, which matches the duplicated data value "10" in price column 126 of row 102a.

Rows 104a and 106a in table 100 are each similarly represented when stored into block 114 on disk 112. Thus, row 104a in table 100 is written to disk as on-disk row structure 104b. The unique data values of row 104a--"1252" and "Tom"--are individually written into on-disk row structure 104b. Row 104a also includes duplicated row values "Book" and "10" in columns 124 and 126, respectively. Portion 150 of on-disk row structure 104b corresponding to column 124 in row 104a is configured to include a pointer 154 to entry 134 in symbol table 110, which matches the duplicated data value "Book". Portion 152 of on-disk row structure 104b corresponding to column 126 in row 104a is configured to include a pointer 156 to entry 132 in symbol table 110, which matches the duplicated data value "10".

Row 106a in table 100 is written to disk as on-disk row structure 106b. In row 106a, the unique data values are "1253", "Tape", and "20", which are individually written into on-disk row structure 106b. Row 106a also includes the duplicated row value "Joe" in column 122. Portion 160 of on-disk row structure 106b corresponding to column 122 in row 106a is configured to include a pointer 162 to entry 130 in symbol table 110, which matches the duplicated data value "Joe".

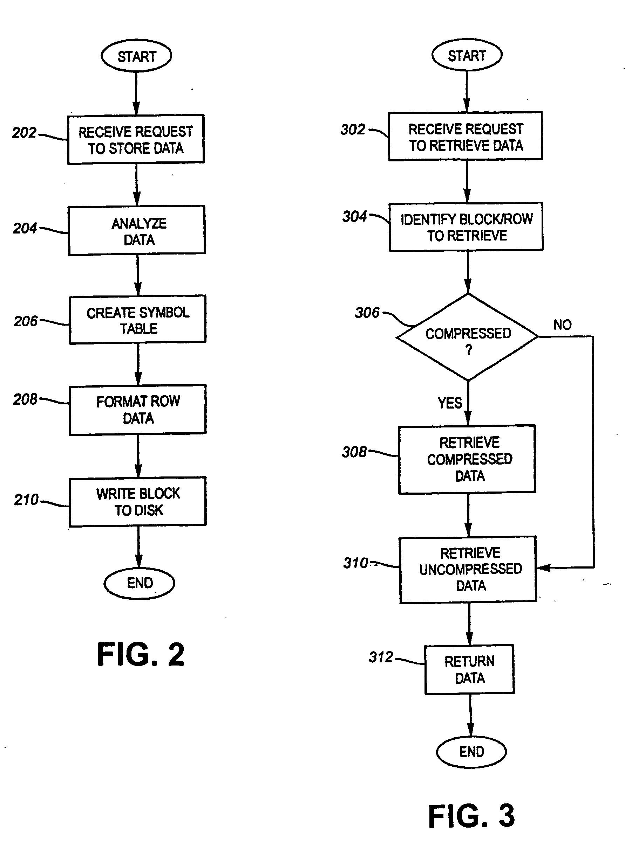

Fig. 2 shows a flowchart of an embodiment of a process for storing data onto disk. At 202, a request is received to store data onto disk. In an embodiment, whether the data is compressed is an option selected by a user or system. If compression is selected, at 204, the data is analyzed to identify repetitive data values for the portions of the data that is to be stored within a given data block. Based upon the identified data duplicates, a symbol taole is created that includes some or all of the duplicate data values (206). Each on-disk row structure in the data block is thereafter created. The on-disk row structures are formatted to exclude some or all of the duplicated data values (208). In particular, on-disk row structures that are associated with a duplicated data value are configured to reference the appropriate entry or entries in the symbol table that stores the relevant data value.

If the compression approach is performed off-line, then the analysis and formatting of rows are performed in batch mode, such that the entire contents of a database block is pre-organized before writing to disk. Off-line processing allows precise determination of the number of rows that will fit into a given data block. Alternatively, the compression approach can be performed on-line, with each on-disk row structure individually prepared and written to disk. In either case, the block metadata is configured to indicate whether the data in the block, or portions of the data in the block, have been compressed. In an embodiment, the header of the block includes a data structure that indicates whether the block or data in the block is compressed. In one embodiment, a single bit is sufficient to indicate whether data in the block is compressed.

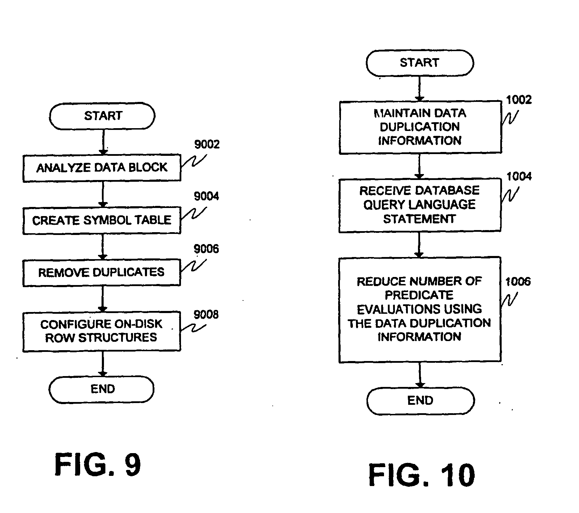

In another embodiment, rather than compressing data as it is loaded into a data block, an uncompressed data block may be transformed into a compressed data. As shown in Fig. 9, a data block is analyzed to identify duplicated data values (9002). Based upon the identified data duplicates, a symbol table is created that includes some or all of the duplicated data values (9004). Some or all of the duplicates of the data values in the symbol table are removed or deleted from the data block (9006). On-disk row structures in the data block are then configured to reference the appropriate entry or entries in the symbol table that stores the relevant data value(s) (9008).

If the likelihood of data repetition within a single block is low, the expected compression ratio is also likely to be low. If the likelihood of such repetition is higher, the expected compression ratio will be higher. Thus, rows can be reorganized to increase the likelihood of such repetitions. One way to do this for a single column table is to order table rows by the column value. This can be achieved in the Structured Query Language (SQL) by executing the statement "CREATE TABLE AS SELECT" with an order by clause. This type of technique can also be applied to a table where one column has low cardinality and other columns have high cardinalities, by ordering table rows by low cardinality column.

For a table with multiple low cardinality columns, tuning to achieve a better compression ratio can be performed by first determining the column with the lowest cardinality. The cardinality of a column can be determined by executing the statement "SELECT COUNT(DISTINCT(c)) from T;". Once the lowest cardinality column is determined (assume it is column C1), the cardinalities of other columns for fixed values of the chosen column are determined. This can be measured by executing the statement "SELECT SUM(count(*) * COUNT(DISTINCT(cK))) from T group by C1;" for all columns cK other than C1. Assume column C2 has the lowest such measure. The column with the lowest cardinality when the first two columns are fixed is then determined. This can be measured by executing the statement "SELECT SUM(count(*) * COUNT(DISTINCT(cK))) from T group by C1, C2;" for all columns cK other than C1 and C2. By continuing this process, one would determine some column sequence C1, C2, ..., Cn. This sequence can be used as the sequence of columns in the ORDERED BY clause of the create table compress statement.

Fig. 3 shows a flowchart of an embodiment of a process for retrieving data from disk. At 302, a request is received to retrieve data from disk. The specific block or row that is being sought is identified at 304. Any conventional indexing or search techniques may be employed to perform operation 304. At 306, a determination is made whether the relevant database block is being stored in compressed format. In an embodiment, the block header is accessed to make this determination. If the block is not compressed, then the requested row information is immediately retrieved from disk (310) and returned to the requesting entity (312). If the block is compressed, then the relevant on-disk row structure for the requested row is accessed to retrieve duplicated data values from the symbol table (308). In addition, the individually stored data values from the on-disk row structure is also retrieved (310). At 312, the complete set of requested data is returned to the requesting entity.

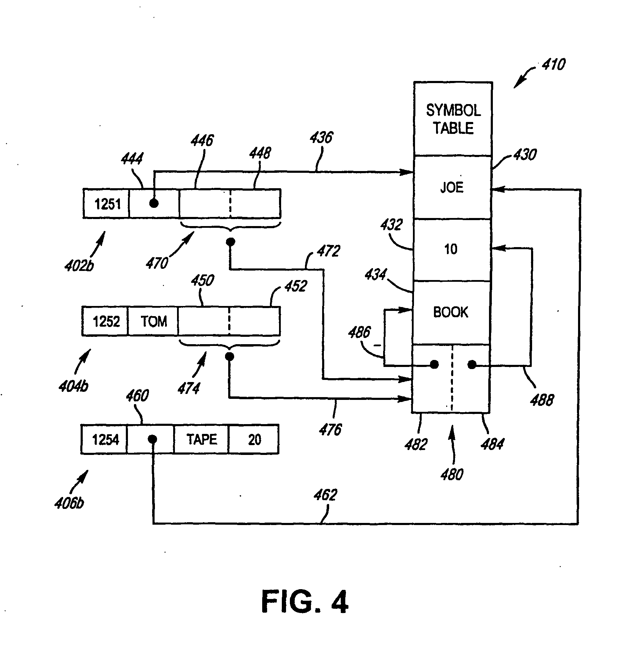

Recursive symbol entries may be used in the symbol table. A recursive symbol entry is an entry in the symbol table that itself references one or more other symbol table entries. Fig. 4 illustrates the use of recursive symbol entries to format a data block to store table 100 of Fig. 1. Like symbol table 110 of Fig. 1, recursive symbol table 410 includes an entry 430 to store the Joe" data value, an entry 432 to store the "10" data value, and an entry 434 to store the "Book" data value.

Unlike symbol table 110 of Fig. 1, recursive symbol table 410 includes a recursive symbol table entry 480 that references other entries within symbol table 410. In particular, recursive symbol table entry 480 includes a first portion 482 that is associated with a link 486 to the data value "Book" in entry 434. Recursive symbol table entry 480 also includes a second portion 484 that is associated with a link 488 to the data value "10" in entry 432. By combining first portion 482 and second portion 484, entry 480 logically creates an entry that includes both referenced data values in sequence, i.e., having the data value of "Book" directly before the data value "10".

One advantage of combining multiple entries in this manner is that there are sequences of column values for rows stored in the block that may match these combinations. Rather than having multiple links or pointer structures between an on-disk row structure and the individual data values in a symbol table, a single link or pointer structure can be used to point to a combined entry that recursively links to multiple other entries.

Referring to table 100 in Fig. 1, columns 124 and 126 in both row 102a and row 104a present the data values "Book" and "10" in sequence. In Fig. 1, on-disk row structure 102b (which corresponds to row 102a) includes a link 138 to the data value "Book" and a separate link 140 to the data value "10". Similarly, on-disk row structure 104b (which corresponds to row 104a) includes a link 154 to the data value "Book" and a separate link 156 to the data value "10". This is a total of four links from these on-disk row structures to entries in symbol table 110.

In the recursive approach of Fig. 4, the on-disk row structure 402b (which corresponds to row 102a) includes a single link 472 to the combined, sequential data values "Book" and "10" represented by recursive symbol table entry 480. This allows the values of both portions 446 and 448 in on-disk row structure 402b (corresponding to columns 124 and 126 in row 102a) to be represented with a single link or pointer structure. Similarly, on-disk row structure 404b (which corresponds to row 104a) includes a single link 476 to the combined, sequential data values "Book" and "10" represented by recursive symbol table entry 480. Again, this allows the values of both portions 450 and 452 in on-disk row structure 404b ((corresponding to columns 124 and 126 in row 104a) to be represented with a single link or pointer structure. The end result is that the approach of Fig. 4 requires fewer links or pointers between the on-disk row structure and the symbol table than is required by the approach of Fig. 1.

The approach of Fig. 4 to reduce the number of links or pointers may also be employed with non-recursive combinational entries in symbol table 410. In particular, entry 480 can be configured such that portion 482 explicitly stores the data value "Book", rather than being associated with a recursive link 486 to entry 434. Portion 484 of entry 480 can also be configured to explicitly store the data value "10", rather than being associated with a recursive link 488 to entry 432. This approach still allows a reduction in the number of links between the on-disk row structure and symbol table 410, but at the cost of possibly increasing the amount of disk space needed to explicitly store the duplicated data values in symbol table 410. Entries in symbol table 410 may also include various combinations of recursive links and explicitly stored data values. While the example of Fig. 4 shows only two data values combined into a recursive symbol entry 480, the inventive concepts can be extended to include any number of data values in a combined symbol table entry.

In one embodiment, column reordering may be performed to improve compression ratios. As noted in the last section, if there are repeating sequences of column values for rows stored in a given block, then the number of links between the symbol table and on-disk row structures can be reduced by creating links to combined entries in the symbol table. Column reordering can be performed to increase the number of duplicated sequences of column values. In an embodiment, column reordering is performed at the granularity level of the data block. Alternatively, column reordering can be performed at other granularities, e.g., across multiple blocks.

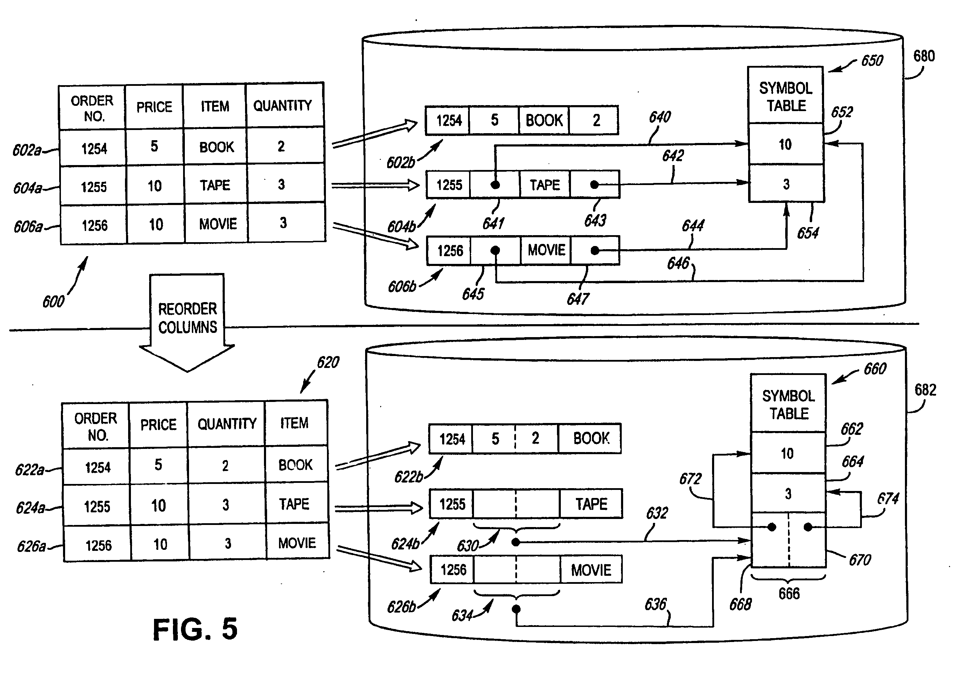

To illustrate, consider database table 600 shown in Fig. 5. Table 600 includes three rows of data, with each row having an Order Number column, a Price column, an Item column, and a Quantity column. Row 602a has the following sequence of data values: "1254", "5", "Book", and "2". Row 604a has the following sequence of data values: "1255", "10", "Tape", and "3". Row 606a has the following sequence of data values: "1256", "10", "Movie", and "3".

Consider the first situation if columns ar not reordered. It is noted that the data values "10" and "3" are duplicated among these rows. Thus, when this table is written to disk 680, a symbol table 650 can be created having a first entry 652 with the data value "10" and a second entry 654 with the data value "3". As rows 602a, 604a, and 606a are written to disk, each on-disk row structure for these rows that is associated with these duplicated data values are configured to reference the appropriate entry in symbol table 650. Thus, on-disk row structure 604b, which corresponds to row 604a, has a portion 641 (corresponding to the data value in the Price column) that is associated with a link 640 to entry 652 in symbol table 650 for the data value "10". On-disk row structure 604b also has a portion 643 (corresponding to the data value in the Quantity column) that is associated with a link 642 to entry 654 in symbol table 650 for the data value "3". On-disk row structure 606b, which corresponds to row 606a, has a portion 645 (corresponding to the data value in the Price column) that is associated with a link 646 to entry 652 in symbol table 650 for the data value "10". On-disk row structure 606b also has a portion 647 (corresponding to the data value in the Quantity column) that is associated with a link 644 to entry 654 in symbol table 650 for the data value "3". Because row 602a does not include any of the duplicated data values, its associated on-disk row structure 602b explicitly stores each column value and does not include any reference to the symbol table.

Consider if column reordering is performed against table 600. The column reordering is performed to increase the possibility of repeating sequences of column values for the rows in the table. In the present example, by switching the ordering between the Item column and the Quantity column in table 600, it can be seen that a repeating sequence of values is created between the Price column and the Quantity column. The result of this column reordering is shown as table 620 in Fig. 5.

In particular, both rows 624a and 626a now have the same sequence of data values "10" and "3" for the Price and Quantity columns. Thus, when symbol table 660 is created on disk 682, a combined entry 666 can be inserted that includes, whether directly or indirectly, the data values "10" and "3" in the sequence shown in table 620 for rows 624a and 626a. If combined entry 666 indirectly includes these values, then entry 666 includes a first portion 668 that recursively references entry 662 and a second portion 670 that recursively references entry 664.

When row 624a is written to disk, its on-disk row structure 624b is associated with a single link 632 to combined entry 666 for the sequence of values "10" and "3". This is in contrast to the approach taken by on-disk row structure 604b for the same row without column reordering, which uses two links 640 and 642 to reference the same two data values. Likewise, when row 626a is written to disk, its on-disk row structure 626b is associated with a single link 636 for the sequence of values "10" and "3". Again, this is in contrast to the approach taken by on-disk row structure 606b for the same row without column reordering, which uses two links 646 and 644 to reference the same two data values.

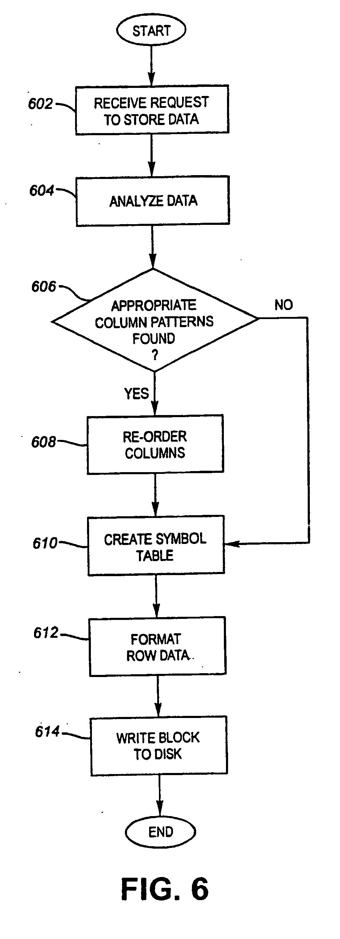

Fig. 6 shows a flowchart of an embodiment of a process for storing data to disk utilizing column reordering. At 602, a request is received to store data onto disk. If compression is turned on, at 604, the data is analyzed to identify repetitive data values for the portions of the data that is to be stored within a given data block. The data analysis also includes an analysis of possible column reordering combinations that may be performed to increase the likelihood of repeating sequences of data values. A determination is made whether there exists column sequences that may be advantageously obtained through column reordering (606). If so, then the appropriate columns are reordered (608). Based upon the identified data duplicates, a symbol table is created to include some or all of the duplicated data values (610). Each on-disk row structure in the database block is thereafter created and formatted to exclude the duplicated data values (612) and are written to disk (614). In particular, each on-disk row structure that is associated with a duplicated data value is configured to include or reference a link to the appropriate entry or entries in the symbol table that stored the relevant data value. The block metadata is configured to indicate whether the data in the block, or portions of the data in the block, have been compressed. In addition, the block metadata is also configured to indicate whether and how column reordering was performed to the stored data. In an embodiment, the header of the block includes a data structure that indicates whether the block or data in the block are compressed and/or reordered. When the data is retrieved from the block, the header information is accessed to allow the data to be reordered and uncompressed back to its original form.

An optimization that can be applied is to remove trailing NULL values from the on-disk versions of stored rows. Rows in a database table may include NULL values in the one or more columns at the end of the row. When these rows are written to disk, additional compression can be achieved by not allocating or writing any space to disk for these NULL values. Instead, the storage system is configured to recognize that if the on-disk version of a particular database row does not include one or more stored values for columns at the end of the row, then those column values are assumed to be NULL values.

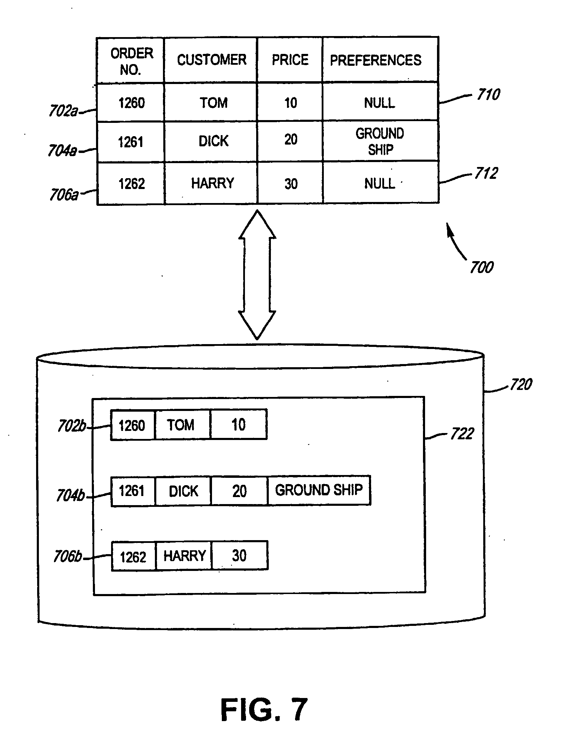

To illustrate, consider table 700 in Fig. 7, which is to be stored to block 722 on disk 720. It is noted that rows 702a and 706a both have a NULL value in the last column of the row. When these rows are written to disk 720, the on-disk row structures for these rows are configured to exclude the trailing NULL values. On-disk row structure 702b, which corresponds to row 702a, does not contain a space allocated for the trailing NULL value in the Preferences column. Instead, it only includes allocated space for the leading "1260", "Tom", and "10" values that appear in row 702a. On-disk row structure 706b, which corresponds to row 706a, does not contain a space allocated for the trailing NULL value. Instead, it only includes allocated space for the leading "1262", "Harry", and "30" values that appear in row 706a.

Column reordering can be performed to increase the likelihood of trailing NULL values appearing in rows to be stored on disk. The column values for a set of data is analyzed to sort the columns based upon the number of NULL values in each column. The columns are reordered so that the columns with the larger number of NULL values are ordered to the end of the rows, and the columns with the smaller number of NULL values are ordered closer to the beginning of the rows. Thus, the columns with the largest number of NULL values may be reordered to the end of the table. The column with the next-largest number of NULL values may be reordered as the second-to-last column of the table, with these sequences of actions continued until an efficient ordering of columns is achieved.

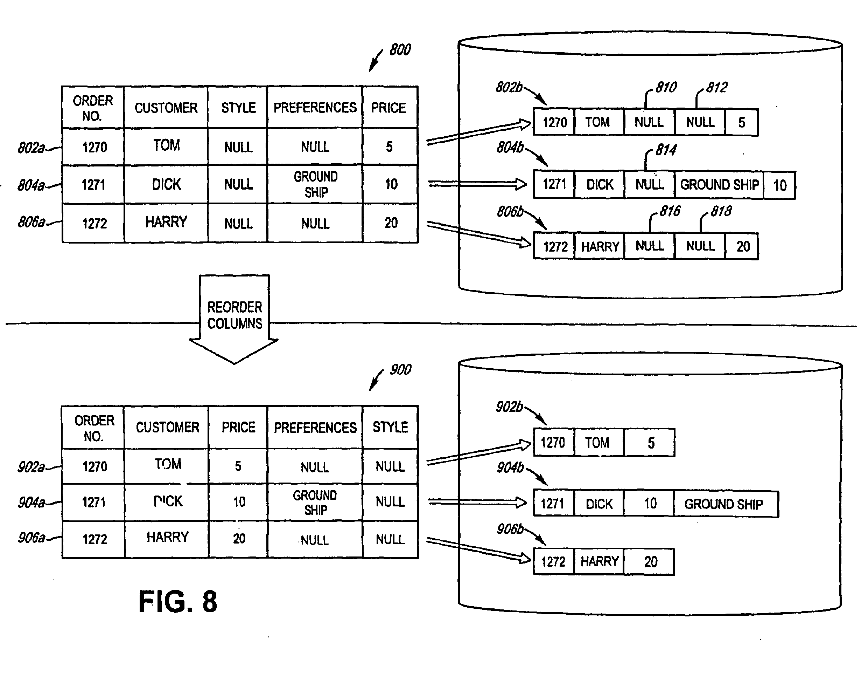

To illustrate possible inefficiencies if column reordering is not performed, reference is made to table 800 in Fig. 8. Table 800 includes a set of rows 802a, 804a, and 806a that is to be written to disk. Each row includes one or more NULL values. Rows 802a and 806a includes NULL values in the Style column and Preferences column. Row 804a includes a NULL value in the Style column. Since none of the NULL values in these rows are trailing NULLs, when these rows are written to disk, space may be wasted in each corresponding on-disk row structure because of the NULL values.

As shown, on-disk row structure 802b, which corresponds to row 802a, includes two spaces 810 and 812 that have been allocated for the NULL values corresponding to the values in the Style and Preferences columns for row 802a. On-disk row structure 804b, which corresponds to row 804a, includes a space 814 that has been allocated for the NULL value corresponding to the value in the Style column of row 804a. On-disk row structure 806b, which corresponds to row 806a, includes two spaces 816 and 818 that have been allocated for the NULL values corresponding to the values in the Style and Preferences columns for row 806a.

Column reordering can be performed to increase the compression efficiency of storing table 800 to disk. The first step is to sort the columns to identify specific columns having larger numbers of NULL values. Here, it can be seen that the Style column in table 800 has the largest number of NULL values (with NULL values for every row). The Preferences column has the next largest number of NULL values (with NULL values in rows 802a and 806a). None of the other columns include NULL values.

The columns are reordered to place the columns with the larger number of NULL values closer to the end of the rows. Table 900 illustrates the result of performing this action on table 800. In particular, the columns are reordered such that the Style column, which has the largest number of NULL values, is placed at the end of the rows. The Preferences column, which has the next largest number of NULL values, is placed second-to-last in the sequence of columns. None of the other columns are reordered since they do not contain NULL values.

This type of reordering has maximized the number of trailing NULL values in the table. Now rows 902a and 906a, which correspond to rows 802a and 806a, respectively, in table 800, both include two trailing NULL values. Rows 802a and 806a did not contain any trailing NULL values. Row 904a in table 900, which corresponds to row 804a in table 800, includes one trailing NULL value. Row 804a did not contain any trailing NULL values.

When rows 902a. 904a, and 906a in table 900 are written to disk, the trailing NULL values can be removed from the on-disk versions of each row. Thus, on-disk row structure 902b, which corresponds to row 902a in table 900, excludes the NULL values for the Preferences and Style columns. On-disk row structure 902b only includes three fields to store the data values "1270", "Tom", and "5" for the Order Number, Customer, and Price columns, respectively. In contrast, on-disk row structure 802b, which is its equivalent prior to column reordering, includes five fields to store the data values "1270", "Tom", "full", "NULL", and "5" for the Order Number, Customer, Style, Preferences, and Price columns, respectively.

On-disk row structure 904b, which corresponds to row 904a in table 900, excludes the NULL value for the Style column. On-disk row structure 904b only includes four fields to store the data values "1270", "Dick", "10", and "Ground Ship" for the Order Number, Customer, Price, and Preferences columns, respectively. In contrast, on-disk row structure 804b, which is its equivalent prior to column reordering, includes five fields to store the date values "1270", "Dick", "NULL", "Ground Ship", and "10" for the Order Number, Customer, Style, Preferences, and Price columns, respectively.

Like on-disk row structure 902b, on-disk row structure 906b, which corresponds to row 906a in table 900, excludes the NULL values for the Preferences and Style columns. On-disk row structure 906b only includes three field to store the data values for the Order Number, Customer, and Price columns. In contrast, on-disk row structure 806b, which is its equivalent before column reordering, includes five fields to store the data values for the Order Number, Customer, Style, Preferences, and Price columns.

Illustrated in Fig. 10 is a method of improving performance of database query language statements. At 1002, information describing data duplication within a data block is maintained. As discussed above, there are several ways of maintaining data duplication information, e.g., using a symbol table. Data within the data block need not be compressed in order to maintain the data duplication information. A database query language statement with at least one predicate is received against data in the data block at 1004. Number of predicate evaluations are reduced using the data duplication information (1006). By reducing the number of predicate evaluations, performance of the database query language statement is improved.

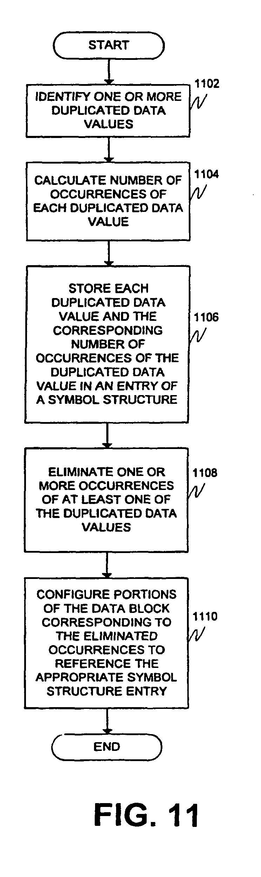

One way of maintaining data duplication information is shown in Fig. 11. One or more duplicated data values are identified (1102) and the number of occurrences of each duplicated data value is calculated (1104). Each duplicated data value and its corresponding number of occurrences are stored in an entry of a symbol structure (1106). One or more occurrences of at least one of the duplicated data values are eliminated or removed from the data block (1108). Portions of the data block corresponding to the eliminated occurrences are configured to reference the appropriate symbol structure entry (1110). A link or a pointer may be used to reference the appropriate symbol structure entry.

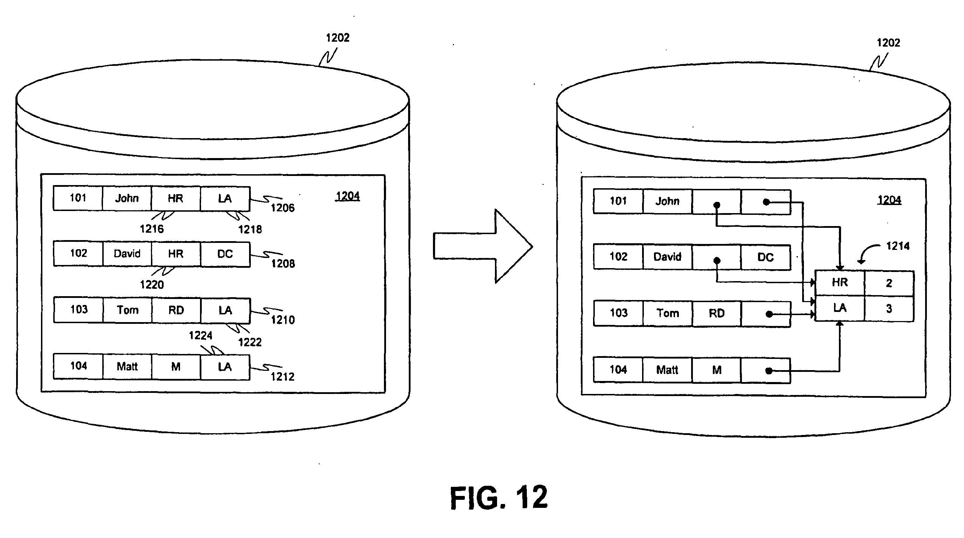

An example of maintaining data duplication information is depicted in Fig. 12. A data block 1204 on disk 1202 contains four on-disk row structures 1206-1212. Each on-disk row structure corresponds to a row in a table (not shown). Two duplicated data values-"HR" and "LA"-are identified in data block 1204 and stored in symbol structure 1214 along with the number of occurrences of each duplicated data value. In the embodiment, symbol structure 1214 is stored in data block 1204 along with row structures 1206-1212. Data value "HR" occurs twice--once in portion 1216 of row structure 1206 and once in portion 1220 of row structure 1208. Data value "LA" occurs three times-once in portion 1218 of row structure 1206, once in portion 1222 in row structure 1210, and once in portion 1224 of row structure 1212. As shown in Fig. 12, the duplicated data values in data block 1204 are eliminated and portions 1216-1224 are configured to reference the appropriate entry in symbol structure 1214.

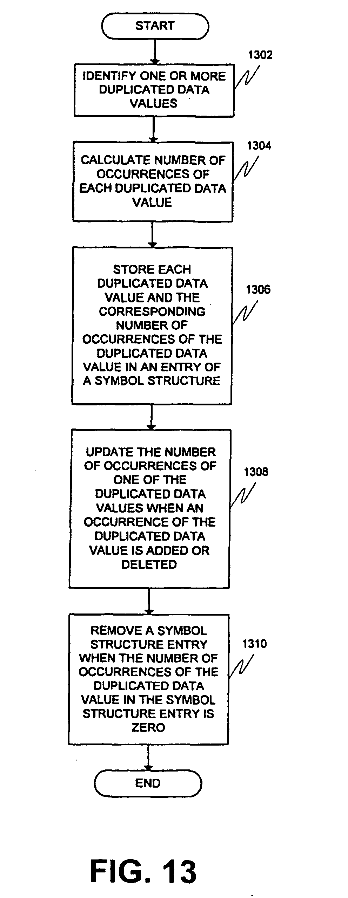

Fig. 13 illustrates another way of maintaining data duplication information. One or more duplicated data values are identified at 1302. The number of occurrences of each duplicated data value is calculated (1304). Each duplicated data value and its corresponding number of occurrences are stored in an entry of a symbol structure (1306). The number of occurrences of one of the duplicated data values is updated when an occurrence of the duplicated data value is added or deleted (1308). A symbol structure entry is removed when the number of occurrences of the duplicated data value in the symbol structure entry is zero (1310).

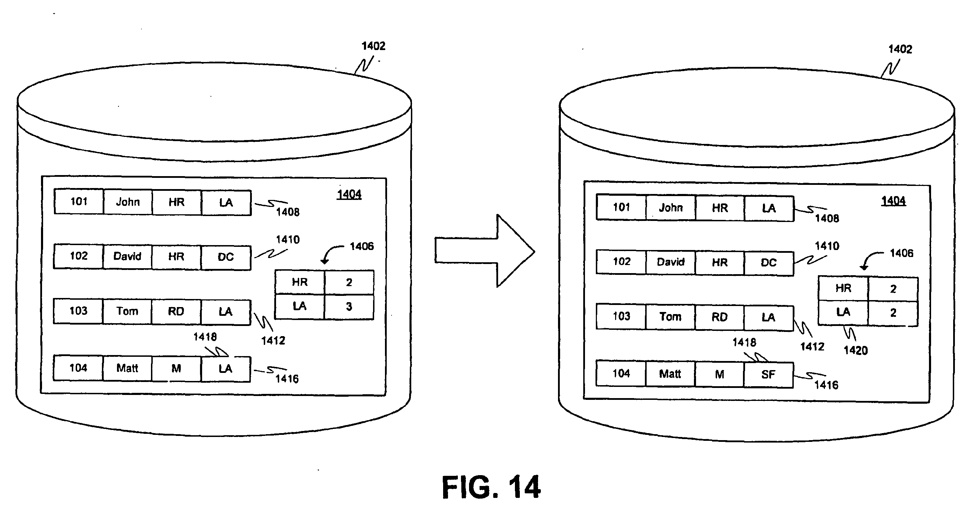

In Fig. 14, information on data duplication within data block 1404 on disk 1402 are maintained within symbol structure 1406. In the example, portion 1418 of on-disk row structure 1416 is updated from data value "LA" to data value "SF". Accordingly, entry 1420 in symbol structure 1406, which corresponds to duplicated data value "LA", is updated to reflect the deletion of a data value "LA" from data block 1404.

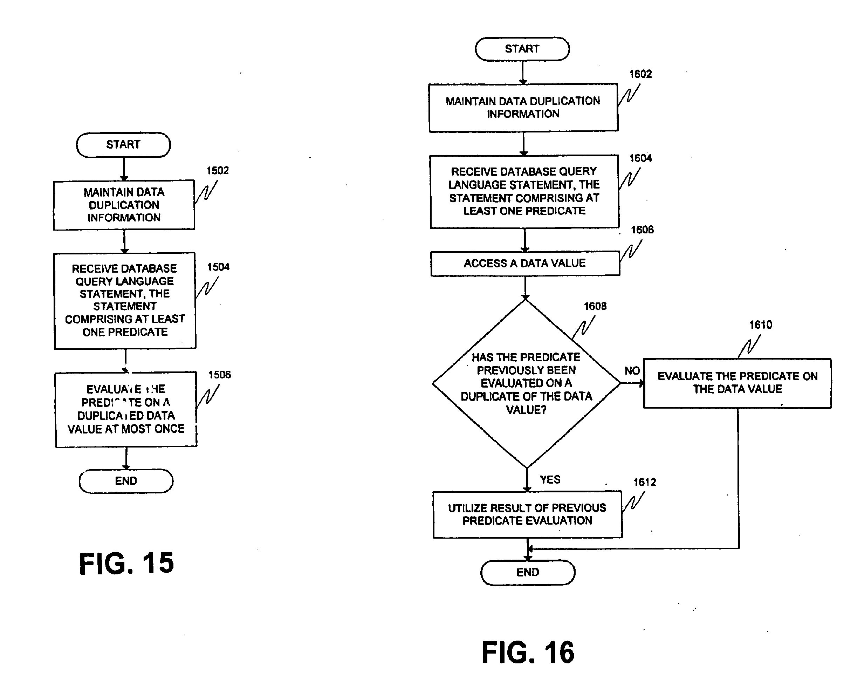

Shown in Fig. 15 is an embodiment of a method of improving performance of database query language statements. At 1502, information on data duplication is maintained. A database query language statement is received (1504). The database query language statement includes at least one predicate. The predicate is evaluated on a duplicated data value at most once (1506).

Fig. 16 illustrates a process flow of another method of improving performance of database query language statements. In the embodiment, data duplication information is maintained (1602). A database query language statement with at least one predicate is received (1604) and a data value is accessed (1606). Before evaluating the at least one predicate on the data value, a determination is made as to whether the predicate has previously been evaluated on a duplicate of the data value (1608). If the predicate has not previously been evaluated on a duplicate of the data value, the predicate is evaluated on the data value (1610). If the predicate has previously been evaluated on a duplicate of the data value, result of the previous predicate evaluation is used instead of re-evaluating the predicate on the same data value (1612).

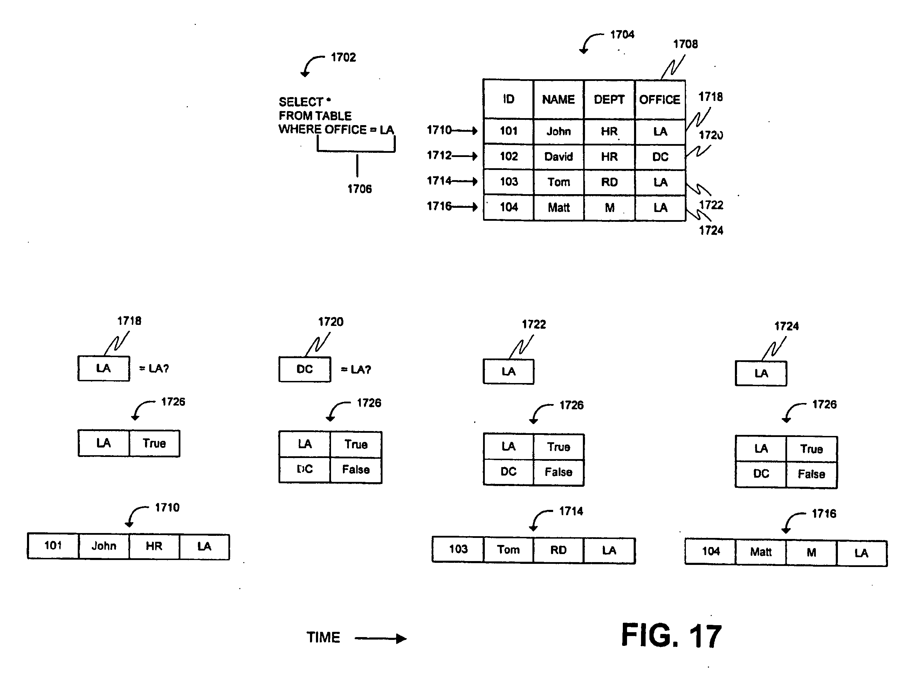

An example of how performance of a database query language statement may be improved is shown in Fig. 17. A database query language statement 1702 is received against data in table 1704. Database query language statement 1702 seeks to find all records in table 1704 that satisfies predicate 1706, i.e., database query language statement 1702 seeks to find all records in table 1704 with data value "LA" in column 1708. Row 1710 is first accessed. Since there has not been any previous predicate evaluations, predicate 1706 is evaluated on data value 1718 in row 1710. The result of the predicate evaluation is stored in a context 1726. Row 1710 is returned as the predicate evaluation result is true.

Row 1712 is then accessed. Before evaluating predicate 1706 on data value 1720 in row 1712, a determination is made as to whether predicate 1706 has previously been evaluated on a duplicate of data value 1720. In one embodiment, context 1726 is checked to determine if there is a previous predicate evaluation result for the data value "DC"-a duplicate of data value 1720. Since the only data value that predicate 1706 has previously been evaluated on is "LA", predicate 1706 is evaluated on data value 1720. The result of the predicate evaluation is stored in context 1726. Row 1712 is not returned as the predicate evaluation result is false.

Next, row 1714 is accessed. Before evaluating predicate 1706 on data value 1722 in row 1714, a determination is made as to whether predicate 1706 has previously been evaluated on a duplicate of data value 1722. Since context 1726 includes a previous predicate evaluation result for the data value "LA", which is a duplicate of data value 1722, predicate 1706 is not evaluated on data value 1722. Instead, the previous predicate evaluation result in context 1726 is used. Row 1714 is returned as the previous predicate evaluation result was true. Row 1716 is accessed and processed in similar fashion. Thus, performance of the database query language statement is improved as predicate 1706 was only evaluated on two data values rather than on four data values.

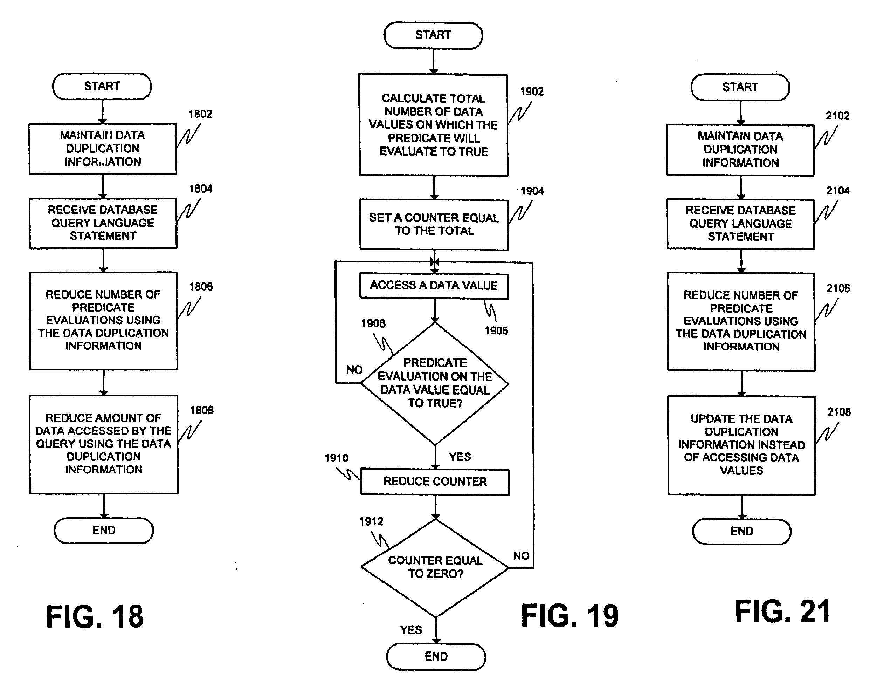

Illustrated in Fig. 18 is a method of improving performance of database query language statements according to one embodiment of the invention. Information on data duplication within a data block is maintained (1802). A database query language statement with at least one predicate is received at 1804. Number of predicate evaluations (1806) and amount of data accessed by the database query language statement (1808) are reduced using the data duplication information.

Fig. 19 depicts one way of reducing amount of data accessed by a database query language statement. At 1902, total number of data values on which the predicate will evaluate to true is calculated. A counter is then set equal to the calculated total at 1904. A data value is accessed (1906) and the predicate is evaluated on the data value (1908). If the result of the predicate evaluation is false, then the process returns and accesses another data value at 1906. If the result of the predicate evaluation is true, then the counter is reduced by one (1910). At 1912, a determination is made as to whether the counter is now equal to zero. If the counter is not equal to zero, then the process returns to 1906 and accesses another data value. If the counter is equal to zero, the process ends.

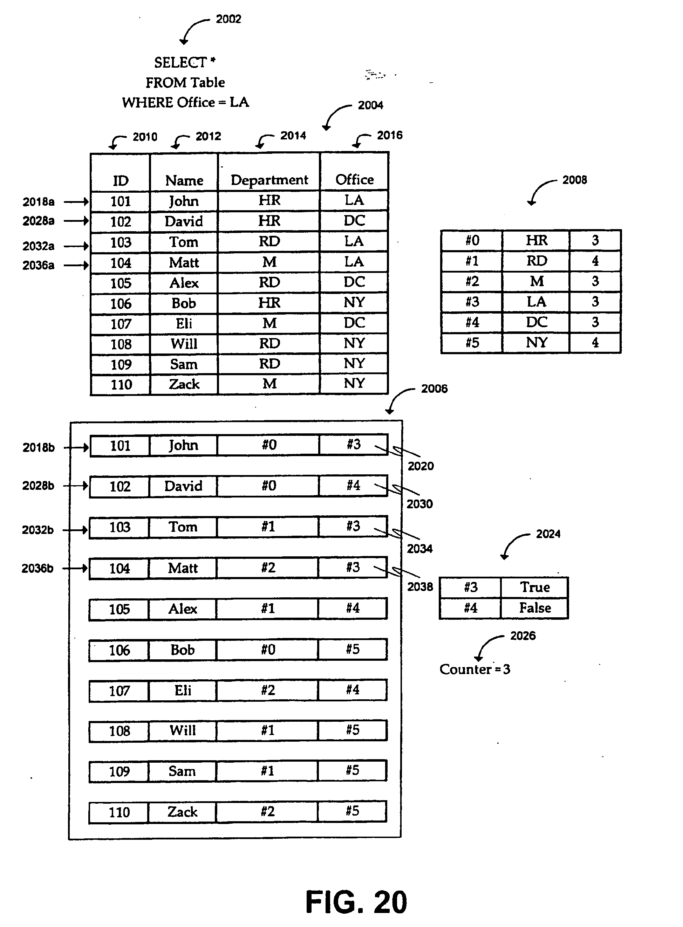

An example of how data duplication information may be used to improve performance of database query language statements is shown in Fig. 20. In Fig. 20, a database query language statement 2002 is received against data in table 2004, which is stored in data block 2006. Database query language statement 2002 seeks to find and return all rows of table 2004 that includes data value "LA" in Office column 2016. Table 2004 includes ten rows and 4 columns-ID column 2010, Name column 2012, Department column 2014, and Office column 2016. There are no duplicated data values in either ID column 2010 or Name column 2012. Department column 2014 and Office column 2016 each have three duplicated data values.

In the embodiment of Fig. 20, data duplication information is stored in a symbol table 2008. Symbol table 2008 includes a copy of each duplicated data value in table 2004 along with the corresponding number of occurrences of the duplicated data value. Each entry in symbol table 2008 also includes an entry number that can be used in data block 2006 to reference the symbol table entry. As illustrated in Fig. 20, each occurrence of a duplicated data value in data block 2006 is replaced with the corresponding symbol table entry number rather than a pointer or a link to the corresponding symbol table entry.

To evaluate database query language statement 2002, row structure 2018b in data block 2006, which corresponds to row 2018a in table 2004, is accessed. Since portion 2020 of row structure 2018b, which corresponds to column 2016 of row 2018a, references entry number #3 in symbol table 2008, duplicated data value "LA" is retrieved from symbol table 2008 and evaluated against the predicate in database query language statement 2002. The result of the predicate evaluation is stored in a context 2024. A counter 2026 is then set to "3", which is equal to the number of occurrences of duplicated data value "LA" in table 2004, since "LA" is the only data value in which the predicate will evaluate to true. Row 2018a of table 2004 is then returned and counter 2026 reduced by 1. When counter 2026 becomes zero, sequential row access of data block 2006 can end since the maximum number of rows that will satisfy the database query language statement will have been returned.

Next, row structure 2028b in data block 2006, which corresponds to row 2028a in table 2004, is accessed. Portion 2030 of row structure 2028b, which corresponds to column 2016 of row 2028a, references entry number #4 in symbol table 2008. Before duplicated data value "DC" is retrieved from symbol table 2008 and evaluated against the predicate in database query language statement 2002, context 2024 is checked to determine whether there is a previous predicate evaluation result for entry number #4. Since context 2024 does not contain a result of a previous predicate evaluation for entry number #4, duplicated data value "DC" is retrieved from symbol table 2008 and evaluated against the predicate in database query language statement 2002. The result of the predicate evaluation is then stored in context 2024. Row 2028a is not returned and counter 2026 is not reduced because the result of the predicate evaluation is false.

Row structure 2032b in data block 2006, which corresponds to row 2032a in table 2004, is accessed. Portion 2034 of row structure 2032b, which corresponds to column 2016 of row 2032a, references entry number #3 in symbol table 2008. Since context 2024 already contains a result of a previous predicate evaluation for entry number #3, the predicate need not be evaluated again. Given that the result of the previous predicate evaluation for entry number #3 is true, row 2032a is returned and counter 2026 is reduced by 1.

Row structure 2036b in data block 2006, which corresponds to row 2036a in table 2004, is accessed in much the same way as row structure 2032b. Like portion 2034 of row structure 2032b, portion 2038 of row structure 2036b, which corresponds to column 2016 of row 2036a, references entry number #3 in symbol table 2008. Since context 2024 already contains a result of a previous predicate evaluation for entry number #3, the predicate need not be evaluated again. Given that the result of the previous predicate evaluation for entry number #3 is true, row 2036a is returned and counter 2026 is again reduced by 1. Sequential row access of data block 2006 then ends as all rows that will satisfy database query language statement 2002 has been returned.

In the example shown in Fig. 20, not only was the number of predicate evaluations reduced from four to two, but the number of rows accessed was also reduced from ten to four as a result of having the data duplication information. Thus, performance of database query language statements may be greatly improved by maintaining information on data duplication within a data block.

Since only one unique data value could satisfy the predicate of database query language statement 2002 in Fig 20, the total number of data values in the data block on which the predicate will evaluate to true is calculated by simply looking at symbol table 2008. For a database query language statement where more than one unique data value could satisfy the predicate, the total number of data values in the data block on which the predicate will evaluate to true is calculated by totaling the number of occurrences of each unique data value in the data block that will satisfy the predicate. For example, if three different unique data values-X, Y, and Z--could satisfy the predicate and X occurs five times in the data block, Y occurs eight times in the data block, and Z occurs three times in the data block, the total number of data values in the data block on which the predicate will evaluate to true is equal to five plus eight plus three, which is sixteen. Hence, counter 2026 in Fig. 20 would be set to sixteen and reduced each time a satisfying data value is returned. Therefore, the amount of data accessed to satisfy a database query language statement may be significantly reduced.

Fig. 21 illustrates a process flow of another method of improving performance of database query language statements. Data duplication information within a data block is maintained (2102). A database query language statement with at least one predicate is received at 2104. The number of predicate evaluations is reduced using the data duplication information (2106). In addition, rather than accessing data values to satisfy the database query language statement, the data duplication information is updated instead (2108).

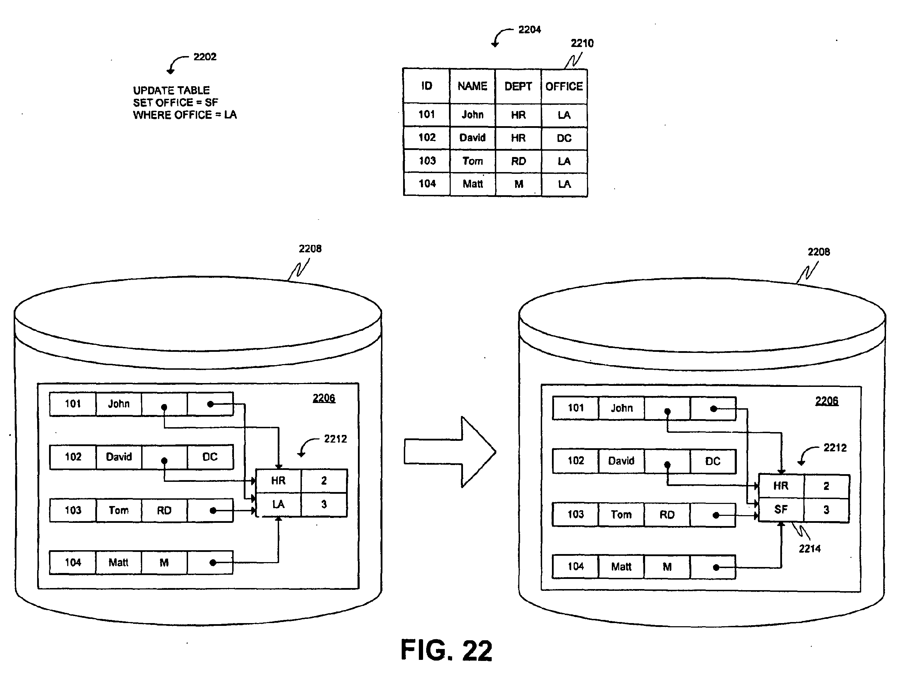

Shown in Fig. 22 is an example of how data duplication information may be updated to satisfy a database query language statement instead of accessing data values in a data block. A database query language statement 2202 is received against table 2204, which is stored in data block 2206 of disk 2208. Database query language statement 2202 seeks to change data values "LA" in Office column 2210 of table 2204 from "LA" to "SF". Since information on data duplication is already being maintained in symbol structure 2212, as described above with respect to Fig. 12, only entry 2214 in symbol structure 2212 need to be updated from "LA" to "SF" to satisfy database query language statement 2202. Thus, performance of database query language statements may be greatly improved when data duplication information is available.

SYSTEM ARCHITECTURE OVERVIEW

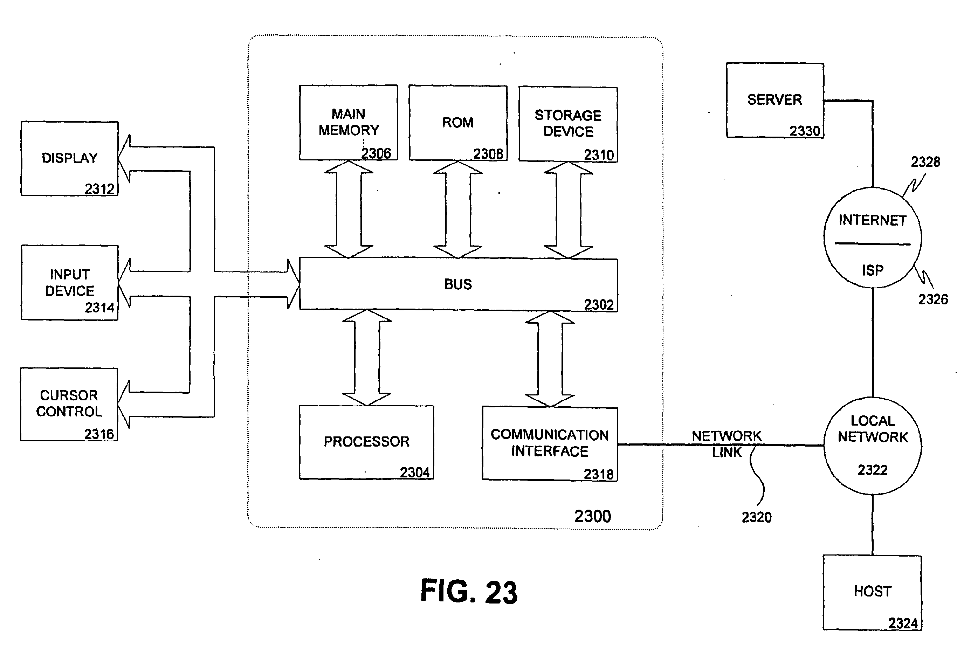

Fig. 23 is a block diagram that illustrates a computer system 2300 upon which a method of improving performance of database query language statements may be implemented. Computer system 2300 includes a bus 2302 or other communication mechanisms for communicating information, and a processor 2304 couple with bus 2302 for processing information. Computer system 2300 also includes a main memory 2306, such as a random access memory (RAM) or other dynamic storage device, couple to bus 2302 for storing information and instructions to be executed by processor 2304. Main memory 2306 also may be used for storing temporary variables or other intermediate information during execution of instructions to be executed by processor 2304. Computer system 2300 further includes read only memory (ROM) 2308 or other static storage device couple to bus 2302 for storing static information and instructions for processor 2304. A storage device 2310, such as a magnetic disk or optical disk, is provided and coupled to bus 2302 for storing information and instructions.

Computer system 2300 may be coupled via bus 2302 to a display 2312, such as a cathode ray tube (CRT), for displaying information to a computer user. An input device 2314, including alphanumeric and other keys, is coupled to bus 2302 for communicating information and command selections to processor 2304. Another type of user input device is cursor control 2316, such as a mouse, a trackball, or cursor direction keys for communicating direction information and command selections to processor 2304 and for controlling cursor movement on display 2312. This input device typically has two degrees of freedom in two axes, a first axis (e.g., x) and a second axis (e.g., y), that allows the device to specify positions in a plane.

In one embodiment computer system 2300 is used to improve performance of database query language statements. According to one embodiment, such use is provided by computer system 2300 in response to processor 2304 executing one or more sequences of one or more instructions contained in main memory 2306. Such instructions may be read into main memory 2306 from another computer-readable medium, such as storage device 2310. Execution of the sequences of instructions contained in main memory 2306 causes processor 2304 to perform the process steps described herein. One or more processors in a multi-processing arrangement may also be employed to execute the sequences of instructions contained in main memory 2306. In other embodiments, hard-wired circuitry may be used in place of or in combination with software instructions. Thus, embodiments of the invention are not limited to any specific combination of hardware circuitry and software.

The term "computer-readable medium" as used herein refers to any medium that participates in providing instructions to processor 2304 for execution. Such a medium may take many forms, including but not limited to, non-volatile media, volatile media, and transmission media. Non-volatile media includes, for example, optical or magnetic disks, such as storage device 2310. Volatile media includes dynamic memory, such as main memory 2306. Transmission media includes coaxial cables, copper wire and fiber optics, including the wires that comprise bus 2302. Transmission media can also take the form of acoustic or light waves, such as those generated during radio wave and infrared data communications.

Common forms of computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 2304 for execution. For example, the instructions may initially be carried on a magnetic disk of a remote computer. The remote computer can load the instructions into its dynamic memory and send the instructions over a telephone line using a modem. A modem local to computer system 2300 can receive the data on the telephone line and use an infrared transmitter to convert the data to an infrared signal.

An infrared detector coupled to bus 2302 can receive the data carried in the infrared signal and place the data on bus 2302. Bus 2302 carries the data to main memory 2306, from which processor 2304 retrieves and executes the instructions. The instructions received by main memory 2306 may optionally be stored on storage device 2310 either before or after execution by processor 2304.

Computer system 2300 also includes a communication interface 2318 coupled to bus 2302. Communication interface 2318 provides a two-way data communication coupling to a network link 2320 that is connected to a local network 2322. For example, communication interface 2318 may be an integrated services digital network (ISDN) card or a modem to provide a data communication connection to a corresponding type of telephone line. As another example, communication interface 2318 may be a local area network (LAN) card to provide a data communication connection to a compatible LAN. Wireless links may also be implemented. In any such implementation, communication interface 2318 sends and receives electrical, electromagnetic or optical signals that carry digital data streams representing various types of information.

Network link 2320 typically provides data communication through one or more networks to other data devices. For example, network link 2320 may provide a connection through local network 2322 to a host computer 2324 or to data equipment operated by an Internet Service Provider (ISP) 2326. ISP 2326 in turn provides data communication services through the world wide packet data communication network now commonly referred to as the "Internet" 2328. Local network 2322 and Internet 2328 both use electrical, electromagnetic or optical signals that carry digital data streams. The signals through the various networks and the signals on network link 2320 and through communication interface 2318, which carry the digital data to and from computer system 2300, are exemplary forms of carrier waves transporting the information.

Computer system 2300 can send messages and receive data, including program code, through the network(s), network link 2320 and communication interface 2318. In the Internet example, a server 2330 might transmit a requested code for an application program through Internet 2328, ISP 2326, local network 2322 and communication interface 2318. In accordance with the invention, one such downloaded application provides for managing, storing, and retrieving data from a storage system containing multiple data storage devices. The received code may be executed by processor 2304 as it is received, and/or stored in storage device 2310, or other non-volatile storage for later execution. In this manner, computer system 2300 may obtain application code in the form of a carrier wave.

ILLUSTRATIVE EMBODIMENT

The following provides implementation details for an embodiment of the invention. In this embodiment, a block data format is employed that allows for various data compression schemes. The data block format can be applied as an extension to existing block formats for existing systems. The data block format defines how row pieces are stored in data blocks. The block header includes fields that indicate whether any or all of the following features are used in a particular block:

- block level compression

- block level column reordering

- intra-row run-length NULL compression

**Column Reordering**

If the column reordering indicator is set, the block uses block-level column reordering. Having a set of row pieces N columns each, a block-level permutation of the column numbers provides column reordering. If a block uses column reordering, two arrays can be stored directly after the block header. The first array stores the lengths of leading columns (ub2 Lens[fixed_width_column_count]). The first fixed_width_column_count >= 0 columns in a block in the present embodiment are fixed length columns within the block. In this embodiment, the value of fixed_width_column_count can be zero. The second array stores column number permutation for the block (ub1 Perms[block-level_column_count]).

Column reordering provides at least two advantages. First, column reordering allows higher compression by grouping appropriate columns together. Second, column reordering improve Nth column access by moving fixed-length columns in front of variable-length columns. If the first set of columns have fixed length within the block, these lengths can be stored once in the block instead of in each row. These lengths can be stored in the length array. These arrays can be considered part of block header for space computations purposes.

Another advantage of column reordering is that if a column is NULL in all row pieces in a block, then it is can be effectively "compressed out" from all row pieces because a NULL column does not have any data and its length can be stored in the length array. Moving block-level fixed column lengths from row pieces to a block-level array may provide relatively cheap compression, which can be particularly effective if column values are short, which occur if the data is highly numeric.

In one embodiment, rows that are column reordered should have equal column counts and the corresponding columns should have equal lengths. However, it is not necessary in all embodiments that all row pieces in a given block have these properties, since Insert and Update operations that violate this requirement may become inefficient under this approach. Therefore, in alternate embodiment, row pieces are allowed in a column-reordered block that do not satisfy the reordering requirement. For column-reordered block, these row pieces are excluded from reordering. These row pieces are not excluded from compression if the block is both reordered and compressed. Therefore, rows are allowed that only partially satisfies the fixed length requirement. Each row in column-reordered block is associated with a designated field identifying how many leading columns in the row have lengths obeying the block-level column length array parameter. In one embodiment, column reordering does not apply to forwarding row pieces and deleted row pieces. Column reordering also does not apply to row pieces that are explicitly excluded from reordering.

The variable part of the new data layer header includes permutations stored in the perms array and fixed width column lengths stored in the lens array. For a block with N column rows having M fixed length columns, the variable part takes sizeof(ub1) $\times$ N + sizeof(ub2) $\times$ M bytes. Assuming sizeof(ub1) $\times$ N + sizeof(ub2) $\times$ M_3 $\times$ N the space taken (referred to as VARSPACE(M,N)) does not exceed 3 $\times$ N. By not storing fixed width column lengths inside row pieces, at least M bytes per row can be saved. For a block with K column-reordered rows the savings can be at least (M - 1) $\times$ K bytes ( M - 1 because there is a per-row piece fixed length column count in a ub1). In an embodiment, the break-even point is at K = 5, with additional saving occurring for K > 5.

In one embodiment, the process should be configured such that column-reordered data does not consume more space than uncompressed data.

As noted above, the first array lens (ub2 lens [fixed- width_column_count]) contains fixed column lengths for the block for the first n columns (where n= fixed_width_column_count). Instead of storing column lengths in each element of the array, prefix sums can be stored for the column lengths using a non-commutative summation to work around possible NULL values, as follows:

lens[0] ←SIZEOF(column[0]),

lens[k] ← lens[k - 1] $\oplus$ SIZEOF(column[k]), k > 0

where SIZEOF(col) $\equiv$ 0x8000 if the column is NULL, and the summation $\oplus$ operation carries 0x8000 bit from the right operand only, i.e. $\oplus$ is not commutative.

For example, consider a sequence of 10 fixed width column lengths as follows:

5, 5, 12, 7, NULL, NULL, 4, NULL, 4, 6,

the array will contain the following values:

*5,* 10, 22, 29, 32797, 32797, 33, 32801, 37, 43.

Extracting Nth column length from this array is performed as follows. First, for k < fixed_width_column_count, lens[k]& 0x8000 is tested to detect if the column k is NULL. If it is not NULL, then its length is:

len ← lens[k] - (lens[k - 1] & 0x7FFF), k > 0
or

len ← lens[0], k = 0

If there are many fixed width columns in a block, then the array can consume a significant amount of space. There are potential advantages for using fixed length column reordering, e.g., to compress out long sequences of NULL columns by rotating globally NULL columns to the end and subsequently performing truncation of trailing NULL values. In general, the more fixed length columns in a block, the higher the probability that several columns will have the same column lengths.

**Block Formats**

If the row compression indicator is set in the block header, then this indicates that all or part of the rows in the block is compressed. For only the purpose of the following explanation, assume that a given block is column reordered, the block's columns 0 through (fixed_width_column_count - 1) are of fixed length and the rest of the columns are of variable length. Further assume that columns 0 through (fixed_width_column_ count - 1) have their lengths removed and stored in the block - level array lens. The rest of the columns have their lengths stored within the row itself.

In an embodiment, the following are defined to the row piece formats for the block:

#define SHORT_INDEX 200

#define SHORT_LENGTH 250

#define LONG_DJDEX 251

#define LONG_LENGTH SHORT_LENGTH

The value of SHORT_INDEX is an index into the symbol table. For values L $\in$ [SHORT_INDEX, SHORT_ LENGTH), len ← (L - KDRCS SHORT INDEX) is the length of an in-place stored column (i.e., uncompressed column). The value of LONG_INDEX indicates that the next 2 bytes contain an index value into the symbol table. The value of LONG_LENGTH indicates that an uncompressed column (with length bytes first) follows. The column count field in the row header contains count of column length first bytes present in the row.

In one embodiment, a symbol table is table[0] with rows in data layer sense. Rows in the symbol table do not have flag bytes or lock bytes. For the flag byte, locking of symbol table entries can be implemented, e.g., by obtaining data block locks. In one embodiment, concurrency loss can be incurred for symbol table operations if operations on the symbol table are not unduly frequent. Flag and lock bytes of symbol table rows can contain a reference count stored as ub2. In an embodiment, symbol table rows are similar to row piece formats, except for the following constants used to partition first length byte values into ranges:

#define SYMTAB_SHORT_INDEX 200

#define SYMTAB_SHORT_LENGTH 250

#define SYMTAB_LONG_INDEX 251

#define SYMTAB_LONG_LENGTH SYMTAB_ SHORT_LENGTH

Interpretation for the first length bytes is the same as for row pieces for blocks as explained above. In addition, multiple column entries are allowed in the symbol table.

In an embodiment, compression of prefix, fixed length columns differs from compression of other columns. The difference occurs because the lengths are removed from these columns. The following can be performed for compression of prefix fixed length columns by using stop bytes Bi. The first byte B0 of a row piece data is an index into the symbol table, if B0 < SHORT_INDEX. Otherwise, (B0 - SHORT_INDEX) is the number of in-place stored (i.e. not compressed) fixed length columns that follow. The next byte B1 either directly follows B0, or directly follows the data for pre-ceding (B0 - SHORT_INDEX) columns correspondingly. This definition continues recursively while the column(s) that follow Bk are still fixed length.

Compressor

In an embodiment, at least two different approaches to compression are available. Online compression will form compressed blocks incrementally. Offline compression buffers sufficient number of rows into buffers first, and then places as many rows as practicable into a compressed block. Online compression is attractive because it does not have to maintain additional buffers or perform additional memcopy operations. However, under certain circumstances, online compression could be very inferior to offline compression in terms of compression quality. For example, forming blocks incrementally could prevent complete pre-analysis of columns before processing, which could negatively impact the ability to efficiently perform block-level column reordering. Trying to work-around these limitations by performing block reorganizations (re-compressions) after a large portion of the block has already been formed could be excessively expensive.

The following description is with respect to offline compression, in which a bulk set of rows are processed to format one or more full data blocks. Each data column can be described as a pointer to its data in a buffer, e.g., in a source table's data blocks.

The present embodiment of the compressor is described using the following Terms:

- SingleEntry (SE) is a representation of a column that has a pointer to data, data length and a few reference counts.

- RowModel (RM) is a representation of a row as an array of pointers to SE and a count of SE (column count).

- RowSetModel (RSM) is a representation of a set of rows as an array of pointers to RM and row count.

**RSM Construction**

As the Compressor module buffers rows for offline compression, it builds an RSM for the set of rows. Each row column is looked up in a hash table, and if not present, a new SE is allocated for the column, otherwise a pointer to an existing SE is used. Dynamic memory managers can be used to reduce fragmentation and memory allocation overheads. In one embodiment, the memory managers are for per-block temporary allocations that persist only for compression of a single block and per-segment memory that persists for the duration of segment compression.

RSM represents a set of rows as a matrix of SE pointers, where equal columns point to the same SEs. Each SE is a candidate to become a single column symbol table entry. Once the RSM is built, the symbol table can be generated consisting of single column entries based on SE reference counts. For some data sets, this will provide efficient compression as repeated SEs will be encoded through small byte indexes into the symbol table. To achieve higher compression, column sequences can be replaced with indexes into the symbol table and create multiple-column symbol table entries.

MultiEntry (ME) is a representation of a multiple-column symbol table entry candidate. It is described using a (row, column) pair of its first column, column count a few more fields. In the present embodiment, the act of compression is related to the act of identifying a set of useful MEs for a given RSM.

Several steps can be taken to perform block-level column reordering computation. In a first step (Step (A)), an empirical rule can be used to compute block-level column reordering: order columns by (column cardinality, column length cardinality). The compressor determines block-level column reordering once per RSM using this rule. In one embodiment, the following two columns c1 and c2 are considered either equal c1 ≡ c2 by this ordering rule, or column c1 can alternatively be considered more acceptable than c2:

11

12

11

12

11

12

11

12

11

12

11

22

Once step (A) is done, dictionary build-up can be performed (step (C)). This step involves identifying { ME } for RSM. An RSM can be thought of as a text over an alphabet consisting of pointers to SEs. For 8k blocks in an embodiment, the lengths of the text are approximately within 5000-10000 symbols (200 - 400 rows 25 columns each) and the number of distinct symbols per block is approximately within 700-900. The problem of identifying { ME } can therefore be thought of as a substitutional compression problem over an integer alphabet with alphabet size about 3 times larger than regular 1-byte alphabet ($256 \cdot 3\ 2\ [700, 900]$).

In an embodiment, the Compressor uses an extra step (B) between steps (A) and (C), and is also referred to herein as the "Prefix Detection" step. This step captures distinctive properties of the data set being compressed, e.g., the property of the data set including a set of rows. A distinctive property of the data set is that it is a set of rows, where columns are ordered by column cardinality in step (A).

An N-ary digital compressed search tree can be built for the set of rows $\left\{ r_i \right\}_{i=1}^{n}$ . This search tree has exactly N leaves for N rows, a root node and several branch nodes. The tree can be described by the following tree construction procedure:

•    An empty tree contains a root node only.

•    After adding the first row $r_1$ to the tree, the tree contains root node, one leaf node and one edge connecting the root with the leaf. The edge is labeled with all symbols in $r_1$.

•    When adding row $r_2$ to the tree, add one leaf node.

If the first symbol in $r_2$ is the same as the first symbol in $r_1$, delete the old edge, add a new branch node to the tree, connect root with the new branch and connect new branch node with both leaves. Label the edge from the root to the new branch node with the longest common prefix of rows $r_1$ and $r_2$. Label edges connecting new branch node with leaves with suffixes of rows $r_1$ and $r_2$ correspondingly.

If the first symbol in $r_2$ is not the same as the first symbol in $r_1$, simply add a new edge from the root to the new leaf, labeling it with all symbols from $r_2$. Tree construction proceeds recursively for all rows in RSM.

As an example, suppose that 4 rows are added to the tree:

ABCDEFGHIJKLMNOPQRSTUVWXYZ

ABCDEFGHIJKLMNOIQRSTUVWXYZ

1 BCDEFGHIJKLMNOPQRSTUVWXYZ

ABCDEFGHIJKLMNOPQRSTAAAAAA

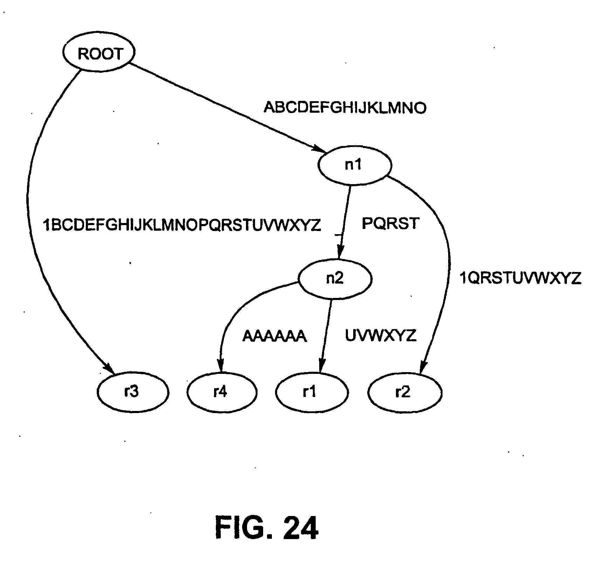

The tree will have two edges coming from the root node, one of them connecting root with leaf node for $r_3$ and labeled with all symbols in $r_3$, the other edge connecting root with branch node, edge labeled with symbols ABCDEFGHIJKLMNO
The two edges coming out of this branch node will be labeled with
1QRSTUVWXYZ
and
PQRST
correspondingly. The first edge will connect the branch with leaf for row $r_2$, the second edge will connect the branch with another branch. Finally that another branch will have two edges connecting it with leaves for $r_1$ and $r_4$, labeled
UVWXYZ
and
AAAAAA
correspondingly. Fig. 24 shows an example illustration of this tree.

The tree has certain properties:

•    Each branch node has at least two outgoing edges

•    The tree has at most $2 \cdot N$ nodes and $2 \cdot N$ edges

•    Catenation of edge labels from root to leaf gives the corresponding leaf's row symbols

•    If two rows share a common prefix, then paths from the root to their leaves share common edges with cumulative length equal to the maximal common prefix length.

•    There is a 1-1 correspondence between branch nodes and prefixes shared by at least two rows.

If each branch node of the tree is labeled with the number of leaf nodes in the subtree rooted in this node and cumulative edge length from the root to this node, then for each branch node we can immediately tell how many rows share the prefix that ends in this node. Once the tree is built, the labeling is possible in a single tree depth-first traversal, which has O(N) complexity in the number of rows N.

Once the tree is built and labeled, proceed with the prefix detection. Prefix detection is based on a simple recursive procedure. Consider the following example for 20 rows:

ABCDEFGHIJKLMNOPac

ABCDEFGHIJKLMNOPad

ABCDEFGHIJKLMNOPae

ABCDEFGHIJKLMNOPaf

ABCDEFGHIJKLMNOPag

ABCDEFGHIJKLMNOPah

ABCDEFGHIJKLMNOPai

ABCDEFGHIJKLMNOPaj

ABCDEFGHIJKLMNOPak

ABCDEFGHIJKLMNOPal

ABCDEFGHIJKLMNOPbm

ABCDEFGHIJKLMNOPbn

ABCDEFGHIJKLMNOPbo

ABCDEFGHIJKLMNOPbp

ABCDEFGHIJKLMNOPbq

ABCDEFGHIJKLMNOPbr

ABCDEFGHIJKLMNOPbs

ABCDEFGHIJKLMNOPbt

A.BCDEFGHIJKLMNOPbu

ABCDEFGHIJKLMNOPbv

the tree will have root node no with one edge $(n_0, n_1)$ coming out of it, labeled with
ABCDEFGHIJKLMNOP
node $n_1$ will have two edges $(n_1, n_2)$ and $(n_1, n_3)$ coming out of it, edge $(n_1, n_2)$ labeled with
a
and edge $(n_1, n_3)$ labeled with
b

Nodes $n_2$ and $n_3$ will be labeled with leaf node counts of 10 and their distance from root is 17. Node $n_1$ will be labeled with leaf node count of 20 and distance from root of 16.

For this example, the following choices can be presented in construction of { ME}:

Choice 1: { ME } = $\varnothing$ (no MEs in the symbol table)

Choice 2: { ME } = {{ABCDEFGHUKLMNOP }} (one ME)

Choice 3: { ME } = {{ABCDEFGHUKLMNOPa},

{ ABCDEFGHUKLMNOPb }} (two MEs)

Choice 4: {ME} = {{ABCDEFGHIJKLMNOP}, {#0a}, {#0&}} (three MEs)

Another tree traversal is performed to help to choose { ME }. The algorithm has a common step. At each step, one branch node is a current node. The common step consists of choosing from the following alternatives:

Alternative 1: Do not create additional MEs for which the current node is a proper prefix.

Alternative 2: Create additional MEs for which the current node is a proper prefix; replicate the prefix that ends in the current node into these MEs.

Alternative 3: Create additional MEs for which the current node is a proper prefix; factor the prefix that ends in the current node into a separate ME and make additional MEs point to it.

Note that for the above 20-row example,

Choice 1: Is given by Alternative 1 when the current node is no;

Choice 2: Is given by Alternative 2 when the current node is no and Alternative 1 when the current node is $n_1$

Choice 3: Is given by Alternative 2 when the current node is $n_0$ and Alternative 2 when the current node is $n_1$

Choice 4: Is given by Alternative 2 when the current node is no and Alternative 3 when the current node is $n_1$

Therefore, the Prefix Detection algorithm traverses the tree, chooses from the above mentioned 3 alternatives at the current branch nodes by considering

•    labels in the current node;

•    labels in all adjacent nodes in the current node's subtree

•    non-zero cost of creating new symbol table entries

and then proceeds into the subtrees. When this tree traversal reaches a leaf node, it "knows" if any prefix of the corresponding row compresses or not, and, if it compresses, which ME it compresses with. Thus, in one approach, the Prefix Detection finds all prefix MEs from optimal set of { ME } for a given block; or finds no MEs if the optimal set is empty or does not include any prefix MEs.

In an embodiment, the compressor operates by first loading a standard data block and an RSM for it parallel. After that, the compressor compresses the RSM by trying to create a new compressed block. If rows from the standard block do not fit into a new compressed block (i.e. no compression), the compressor writes a standard block and proceeds onto the next set of rows. Otherwise, an estimate is made of compression gain by comparing free space in the standard block to free space in the compressed block. If there is no or minimal compression gain, then the standard block is written and the compressor proceeds onto the next set of rows. Otherwise, if the compression gain is substantial, then estimate the number of rows that will fit into the block through interpolation and switch into buffering mode. In the buffering mode, build RSM without loading any data into blocks. Once the estimated number of rows has been buffered into RSM, try to compress the RSM again. Three possible outcomes are:

• RSM does not fit into a single compressed block.

• RSM fits into a single compressed block and free space wastage is minimal.

• RSM fits into a single compressed block and there is still free space to load more rows.

In the first case, start reducing the number of rows in RSM that the compressor tries to load into a single block by repeatedly bisecting [known2fit, known2notfit] interval with the start condition known2fit = number of rows in uncompressed block, known2notfit = number of rows that we estimated but that did not fit. In the second case write a compressed block and proceed to the next set of rows. In the third case, make a new estimation for the number of rows and continue buffering the RSM.

Each individual block compression involves executing step (A), step (B), substituting detected prefix in RSM and feeding the resulting RSM to step (C).

Decompressor

The present invention allows very fast, low overhead decompression of compressed data. In an embodiment, column values/lengths are readily available in the block. Therefore, the decompression process is a matter cf locating these values by interpreting block header bits, fixed column and column permutation arrays if present, and first length bytes in the row and symbol table entries this row references. These referenced data values can be returned without performing any costly decompression or reconstruction algorithms.

In the foregoing specification, the invention has been described with reference to specific embodiments thereof. It will, however, be evident that various modifications and changes may be made thereto without departing from the scope of the invention. For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

## Claims

1. A computer-implemented method for storing data in a compressed format, comprising:

    receiving a request to store data rows of a table onto one or more database blocks on disk (112), the data including fields, each field storing a data item;
    analyzing the data to identify duplicated data items that are to be stored within a given data block;
    creating a symbol table on-disk (110, 410) storing some or all of the duplicated data items; and
    formatting an on-disk data structure (102b, 104b, 106b) in the data block corresponding to the data, comprising configuring each on-disk row structure (102b, 104b, 106b) that is associated with a duplicated data item to include a reference to the duplicated data item stored in the symbol table thereby reducing or eliminating duplicated data items in the on-disk data structure (102b, 104b, 106b);
    **characterized in that** the method further comprises:

    reordering data columns to create repeating sequences of data items across multiple fields of the rows in the data to be stored;
    storing a repeated sequence of data items as a combined entry in the symbol table; and
    configuring each on-disk row structure (102b, 104b, 106b) that is associated with the repeated sequence of data items to include a single link to the combined entry stored in the symbol table.

2. The method of claim 1, in which a link (136, 138, 140, 154, 156, 162) is used to reference the duplicated data item stored in the symbol table (110, 410).

3. The method of claim 1, in which a group of rows are buffered before being stored in a compressed format.

**4.** The method of claim 1, in which the rows are reordered by the data item of a low cardinality column to increase the likelihood of duplicate data items within the one or more database blocks.

**5.** The method of claim 1, in which the symbol table (410) comprises an entry (480) that recursively references another entry (432, 434) in the symbol table (410).

**6.** The method of claim 5, in which the entry (480) references multiple other entries (432, 434) in the symbol table (410).

**7.** The method of claim 5, in which the entry (480) comprises both the stored duplicated data item and the entry (480) that recursively references another entry (432, 434) in the symbol table (410).

**8.** The method of claim 1, in which column reordering is performed at the level of the database block.

**9.** The method of claim 1, in which a trailing NULL value is not included in the on-disk data structure (102b, 104b, 106b).

**10.** The method of claim 1, in which the database block comprises metadata indicating whether compression is being applied.

**11.** The method of claim 10, in which the metadata comprises a single bit.

**12.** The method of claim 1, in which the database block comprises metadata indicating whether columns are being reordered.

**13.** A computer program product that includes a computer readable medium, the computer readable medium having stored thereon a sequence of instructions which, when executed by a processor, causes the processor to perform any of the methods of claims 1 to 12.

**14.** A computer system for storing data in a compressed format, the system comprising means for performing any of the methods of claims 1 to 12.

**Patentansprüche**

**1.** Computerimplementiertes Verfahren zum Speichern von Daten in einem komprimierten Format, umfassend:

Empfangen einer Anforderung Datenreihen einer Tabelle auf einen oder mehrere Datenbankblöcke auf Speicherplatte (112) zu speichern, wobei die Daten Felder einschließen, jedes Feld ein Datenelement speichert;
Analysieren der Daten, um duplizierte Datenelemente zu identifizieren, die in einem gegebenen Datenblock gespeichert werden sollen;
Erstellen einer Symboltabelle On-Disc (110, 410), wobei einige oder alle der duplizierten Datenelemente gespeichert werden; und
Formatieren einer On-Disc-Datenstruktur (102b, 104b, 106b) im Datenblock, der den Daten entspricht, welches Konfigurieren jeder On-Disc-Reihenstruktur (102b, 104b, 106b) umfasst, die mit einem duplizierten Datenelement assoziiert ist, um Referenz auf das in der Symboltabelle gespeicherte duplizierte Datenelement einzuschließen, um **dadurch** duplizierte Datenelemente in der On-Disc-Datenstruktur (102b, 104b, 106b) zu reduzieren oder zu eliminieren;
**dadurch gekennzeichnet, dass** besagtes Verfahren weiter umfasst:

Neuordnung von Datenspalten, um Wiederholsequenzen von Datenspalten über mehrfache Felder der Reihen in den zu speichernden Daten zu schaffen;
Speichern einer wiederholten Sequenz von Datenelementen als einen kombinierten Eintrag in die Symboltabelle; und
Konfigurieren jeder On-Disc-Reihenstruktur (102b, 104b, 106b), die mit der wiederholten Sequenz von Datenelementen assoziiert ist, um ein Single-Link zum kombinierten Eintrag einzuschließen, der in der Symboltabelle gespeichert ist.

**2.** Verfahren nach Anspruch 1, in dem ein Link (136, 138, 140, 154, 156, 162) verwendet wird, um das duplizierte Datenelement zu referenzieren, das in der Symboltabelle (110, 410) gespeichert ist.

**3.** Verfahren nach Anspruch 1, in dem eine Gruppe von Reihen vor Speichern in einem komprimierten Format gepuffert wird.

**4.** Verfahren nach Anspruch 1, in dem die Reihen durch das Datenelement einer Spalte niedriger Kardinalität neu geordnet werden, um die Wahrscheinlichkeit von duplizierten Datenelementen in dem einen Datenblock oder den mehreren Datenblöcken zu erhöhen.

**5.** Verfahren nach Anspruch 1, in dem die Symboltabelle (410) einen Eintrag (480) umfasst, der einen anderen Eintrag (432, 434) in der Symboltabelle (410) rekursiv referenziert.

**6.** Verfahren nach Anspruch 5, in dem der Eintrag (480) mehrfache andere Einträge (432, 434) in der Symboltabelle (410) referenziert.

**7.** Verfahren nach Anspruch 5, in dem der Eintrag (480) sowohl das gespeicherte duplizierte Datenelement als auch den Eintrag (480) umfasst, der rekursiv einen weiteren Eintrag (432, 434) in der Symboltabelle (410) referenziert.

**8.** Verfahren nach Anspruch 1, in dem Spaltenneuordnung auf dem Level des Datenbankblocks ausgeführt wird.

**9.** Verfahren nach Anspruch 1, in dem ein nacheilender NULL-Wert nicht in der On-Disc-Datenstruktur (102b, 104b, 106b) inbegriffen ist.

**10.** Verfahren nach Anspruch 1, in dem der Datenbankblock Metadaten umfasst, die anzeigen, ob Komprimierung angewandt wird.

**11.** Verfahren nach Anspruch 10, in dem die Metadaten ein einzelnes Bit umfassen.

**12.** Verfahren nach Anspruch 1, in dem der Datenbankblock Metadaten umfasst, die anzeigen, ob Spalten neu geordnet werden.

**13.** Computerprogrammprodukt, das ein computerlesbares Medium einschließt, wobei das computerlesbare Medium eine Sequenz von Befehlen darauf gespeichert hat, die, wenn von einem Prozessort ausgeführt, bewirken, dass der Prozessor beliebige der Verfahren von Ansprüchen 1 bis 12 durchführt.

**14.** Computersystem zum Speichern von Daten in einem komprimierten Format, wobei das System Mittel zum Durchführen beliebiger Verfahren der Ansprüche 1 bis 12 umfasst.

**Revendications**

**1.** Procédé mis en oeuvre sur ordinateur pour mémoriser des données dans un format compressé, comprenant :

la réception d'une demande de mémorisation de rangées de données d'une table sur un ou plusieurs blocs de base de données sur disque (112), les données comportant des champs, chaque champ mémorisant un élément de donnée ;
l'analyse des données pour identifier des éléments de données dupliqués qui vont être mémorisés dans un bloc de données donné ;
la création d'une table de symboles sur disque (110, 410) mémorisant certains des éléments de données dupliqués ou tous ; et
le formatage d'une structure de données sur disque (102b, 104b, 106b) dans le bloc de données correspondant aux données, comprenant la configuration de chaque structure de rangées sur disque (102b, 104b, 106b) qui est associée à un élément de données dupliqué afin d'inclure une référence à l'élément de données dupliqué mémorisé dans la table de symboles réduisant ou éliminant ainsi les éléments de données dupliqués dans la structure de données sur disque (1 02b, 104b, 106b) ;
**caractérisé en ce que** le procédé comprend en outre:

la remise en ordre des colonnes de données afin de créer des séquences répétées d'éléments de données dans de multiples champs des rangées dans les données à mémoriser ;
la mémorisation d'une séquence répétée d'éléments de données comme entrée combinée dans la table de symboles ; et
la configuration de chaque structure de rangées sur disque (1 02b, 104b, 106b) qui est associée à la séquence répétée d'éléments de données afin d'inclure une liaison unique avec l'entrée combinée mémorisée dans la table de symboles.

**2.** Procédé selon la revendication 1, dans lequel une liaison (136, 138, 140, 154, 156, 162) est utilisée pour référencer l'élément de données dupliqué mémorisé dans la table de symboles (110, 410).

**3.** Procédé selon la revendication 1, dans lequel un groupe de rangées est tamponné avant d'être mémorisé dans un format compressé.

**4.** Procédé selon la revendication 1, dans lequel les rangées sont remises en ordre par l'élément de données d'une colonne de faible cardinalité afin d'augmenter la probabilité d'éléments de données dupliqués dans les un ou plusieurs blocs de base de données.

**5.** Procédé selon la revendication 1, dans lequel la table de symboles (410) comprend une entrée (480) qui fait référence de façon récursive à une autre entrée (432, 434) dans la table de symboles (410).

**6.** Procédé selon la revendication 5, dans lequel chaque entrée (480) fait référence à de multiples autres entrées (432, 434) dans la table de symboles (410).

**7.** Procédé selon la revendication 5, dans lequel l'entrée (480) comprend à la fois l'élément de données dupliqué mémorisé et l'entrée (480) qui fait référence de façon récursive à une autre entrée (432, 434) dans la table de symboles (410).

8. Procédé selon la revendication 1, dans lequel la remise en ordre des colonnes est effectuée au niveau du bloc de base de données.

9. Procédé selon la revendication 1, dans lequel une valeur de queue de NUL n'est pas incluse dans la structure de données sur disque (102b, 104b, 106b).

10. Procédé selon la revendication 1, dans lequel le bloc de base de données comprend des métadonnées qui indiquent si une compression est appliquée ou non.

11. Procédé selon la revendication 10, dans lequel les métadonnées comprennent un bit unique.

12. Procédé selon la revendication 1, dans lequel le bloc de base de données comprend des métadonnées qui indiquent si des colonnes sont remises en ordre ou non.

13. Produit de programme informatique qui comporte un support lisible par ordinateur, sur le support lisible par ordinateur étant mémorisée une séquence d'instructions qui, lorsqu'elles sont exécutées par un processeur, amène le processeur à exécuter l'un quelconque des procédés des revendications 1 à 12.

14. Système informatique de mémorisation de données dans un format compressé, le système comprenant des moyens permettant d'exécuter l'un quelconque des procédés des revendications 1 à 12.

FIG. 1

EP 1 504 377 B1

FIG. 2

FIG. 3

23

FIG. 4

FIG. 5

START

602 — RECEIVE REQUEST
TO STORE DATA

604 — ANALYZE DATA

606 — APPROPRIATE
COLUMN PATTERNS
FOUND
?

NO

YES

608 — RE-ORDER
COLUMNS

610 — CREATE SYMBOL
TABLE

612 — FORMAT
ROW DATA.

614 — WRITE BLOCK
TO DISK

END

# FIG. 6

| | ORDER NO. | CUSTOMER | PRICE | PREFERENCES | |
|---|---|---|---|---|---|
| 702a | 1260 | TOM | 10 | NULL | 710 |
| 704a | 1261 | DICK | 20 | GROUND SHIP | |
| 706a | 1262 | HARRY | 30 | NULL | 712 |

700

720

722

| 702b | 1260 | TOM | 10 | |
|---|---|---|---|---|
| 704b | 1261 | DICK | 20 | GROUND SHIP |
| 706b | 1262 | HARRY | 30 | |

**FIG. 7**

| ORDER NO. | CUSTOMER | STYLE | PREFERENCES | PRICE |
|---|---|---|---|---|
| 1270 | TOM | NULL | NULL | 5 |
| 1271 | DICK | NULL | GROUND SHIP | 10 |
| 1272 | HARRY | NULL | NULL | 20 |

REORDER COLUMNS

| ORDER NO. | CUSTOMER | PRICE | PREFERENCES | STYLE |
|---|---|---|---|---|
| 1270 | TOM | 5 | NULL | NULL |
| 1271 | DICK | 10 | GROUND SHIP | NULL |
| 1272 | HARRY | 20 | NULL | NULL |

**FIG. 8**

START

ANALYZE DATA BLOCK 9002

CREATE SYMBOL TABLE 9004

REMOVE DUPLICATES 9006

CONFIGURE ON-DISK ROW STRUCTURES 9008

END

**FIG. 9**

START

MAINTAIN DATA DUPLICATION INFORMATION 1002

RECEIVE DATABASE QUERY LANGUAGE STATEMENT 1004

REDUCE NUMBER OF PREDICATE EVALUATIONS USING THE DATA DUPLICATION INFORMATION 1006

END

**FIG. 10**

START

IDENTIFY ONE OR MORE
DUPLICATED DATA
VALUES
1102

CALCULATE NUMBER OF
OCCURRENCES OF
EACH DUPLICATED DATA
VALUE
1104

STORE EACH
DUPLICATED DATA
VALUE AND THE
CORRESPONDING
NUMBER OF
OCCURRENCES OF THE
DUPLICATED DATA
VALUE IN AN ENTRY OF
A SYMBOL STRUCTURE
1106

ELIMINATE ONE OR
MORE OCCURRENCES
OF AT LEAST ONE OF
THE DUPLICATED DATA
VALUES
1108

CONFIGURE PORTIONS
OF THE DATA BLOCK
CORRESPONDING TO
THE ELIMINATED
OCCURRENCES TO
REFERENCE THE
APPROPRIATE SYMBOL
STRUCTURE ENTRY
1110

END

# FIG. 11

**FIG. 12**

EP 1 504 377 B1

FIG. 13

**FIG. 14**

34

**FIG. 15**

START

MAINTAIN DATA DUPLICATION INFORMATION — 1502

RECEIVE DATABASE QUERY LANGUAGE STATEMENT, THE STATEMENT COMPRISING AT LEAST ONE PREDICATE — 1504

EVALUATE THE PREDICATE ON A DUPLICATED DATA VALUE AT MOST ONCE — 1506

END

**FIG. 16**

START

MAINTAIN DATA DUPLICATION INFORMATION — 1602

RECEIVE DATABASE QUERY LANGUAGE STATEMENT, THE STATEMENT COMPRISING AT LEAST ONE PREDICATE — 1604

ACCESS A DATA VALUE — 1606

HAS THE PREDICATE PREVIOUSLY BEEN EVALUATED ON A DUPLICATE OF THE DATA VALUE? — 1608

NO → EVALUATE THE PREDICATE ON THE DATA VALUE — 1610

YES → UTILIZE RESULT OF PREVIOUS PREDICATE EVALUATION — 1612

END

EP 1 504 377 B1

1702

SELECT *
FROM TABLE
WHERE OFFICE = LA

1706

1704  1708

| ID | NAME | DEPT | OFFICE |
|---|---|---|---|
| 101 | John | HR | LA |
| 102 | David | HR | DC |
| 103 | Tom | RD | LA |
| 104 | Matt | M | LA |

1710 →
1712 →
1714 →
1716 →

1718
1720
1722
1724

1718

| LA | = LA? |
|---|---|

1726

| LA | True |
|---|---|

1710

| 101 | John | HR | LA |
|---|---|---|---|

1720

| DC | = LA? |
|---|---|

1726

| LA | True |
|---|---|
| DC | False |

1722

| LA |
|---|

1726

| LA | True |
|---|---|
| DC | False |

1714

| 103 | Tom | RD | LA |
|---|---|---|---|

1724

| LA |
|---|

1726

| LA | True |
|---|---|
| DC | False |

1716

| 104 | Matt | M | LA |
|---|---|---|---|

TIME →

FIG. 17

2002

SELECT *
FROM Table
WHERE Office = LA

2004

2010    2012    2014    2016

| ID | Name | Department | Office |
|---|---|---|---|
| 101 | John | HR | LA |
| 102 | David | HR | DC |
| 103 | Tom | RD | LA |
| 104 | Matt | M | LA |
| 105 | Alex | RD | DC |
| 106 | Bob | HR | NY |
| 107 | Eli | M | DC |
| 108 | Will | RD | NY |
| 109 | Sam | RD | NY |
| 110 | Zack | M | NY |

2018a →
2028a →
2032a →
2036a →

2008

| #0 | HR | 3 |
|---|---|---|
| #1 | RD | 4 |
| #2 | M | 3 |
| #3 | LA | 3 |
| #4 | DC | 3 |
| #5 | NY | 4 |

2006

| 101 | John | #0 | #3 | 2020 |
|---|---|---|---|---|
| 102 | David | #0 | #4 | 2030 |
| 103 | Tom | #1 | #3 | 2034 |
| 104 | Matt | #2 | #3 | 2038 |
| 105 | Alex | #1 | #4 | |
| 106 | Bob | #0 | #5 | |
| 107 | Eli | #2 | #4 | |
| 108 | Will | #1 | #5 | |
| 109 | Sam | #1 | #5 | |
| 110 | Zack | #2 | #5 | |

2018b →
2028b →
2032b →
2036b →

2024

| #3 | True |
|---|---|
| #4 | False |

2026

Counter = 3

# FIG. 20

**FIG. 18**

START

MAINTAIN DATA DUPLICATION INFORMATION — 1802

RECEIVE DATABASE QUERY LANGUAGE STATEMENT — 1804

REDUCE NUMBER OF PREDICATE EVALUATIONS USING THE DATA DUPLICATION INFORMATION — 1806

REDUCE AMOUNT OF DATA ACCESSED BY THE QUERY USING THE DATA DUPLICATION INFORMATION — 1808

END

**FIG. 19**

START

CALCULATE TOTAL NUMBER OF DATA VALUES ON WHICH THE PREDICATE WILL EVALUATE TO TRUE — 1902

SET A COUNTER EQUAL TO THE TOTAL — 1904

ACCESS A DATA VALUE — 1906

PREDICATE EVALUATION ON THE DATA VALUE EQUAL TO TRUE? — 1908

NO

YES

REDUCE COUNTER — 1910

COUNTER EQUAL TO ZERO? — 1912

NO

YES

END

**FIG. 21**

START

MAINTAIN DATA DUPLICATION INFORMATION — 2102

RECEIVE DATABASE QUERY LANGUAGE STATEMENT — 2104

REDUCE NUMBER OF PREDICATE EVALUATIONS USING THE DATA DUPLICATION INFORMATION — 2106

UPDATE THE DATA DUPLICATION INFORMATION INSTEAD OF ACCESSING DATA VALUES — 2108

END

2202

UPDATE TABLE
SET OFFICE = SF
WHERE OFFICE = LA

2204 2210

| ID | NAME | DEPT | OFFICE |
|-----|-------|------|--------|
| 101 | John | HR | LA |
| 102 | David | HR | DC |
| 103 | Tom | RD | LA |
| 104 | Matt | M | LA |

2208

| 101 | John | | |
|-----|------|---|---|

2206

| 102 | David | | DC |
|-----|-------|---|----|

2212

| HR | 2 |
|----|---|
| LA | 3 |

| 103 | Tom | RD | |
|-----|-----|----|---|

| 104 | Matt | M | |
|-----|------|---|---|

2208

| 101 | John | | |
|-----|------|---|---|

2206

| 102 | David | | DC |
|-----|-------|---|----|

2212

| HR | 2 |
|----|---|
| SF | 3 |

2214

| 103 | Tom | RD | |
|-----|-----|----|---|

| 104 | Matt | M | |
|-----|------|---|---|

FIG. 22

**FIG. 23**

**FIG. 24**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6006232 A

- EP 0079465 A

**Non-patent literature cited in the description**

- **Olken F. ; Rotem D.** *Rearranging Data to Maximize the Efficiency of compression*